# EUROPÄISCHE PATENTSCHRIFT

(11) **EP 4 357 718 B1**
(45) Veröffentlichungstag und Bekanntmachung des Hinweises auf die Patenterteilung: **02.10.2024**
(21) Anmeldenummer: 22201832.7
(22) Anmeldetag: 17.10.2022
(51) Int. Cl.: F28F 21/04, F28F 21/00, F24S 20/60, F24S 60/10, F28D 20/00, F28D 20/02, F24S 20/66

(54) **MASSIVABSORBER FÜR HEIZUNGS- UND KÜHLZWECKE IN GEBÄUDEN**
SOLID ABSORBER FOR HEATING AND COOLING PURPOSES IN BUILDINGS
ABSORBEUR MASSIF POUR CHAUFFAGE ET REFROIDISSEMENT DANS DES BÂTIMENTS

(43) Veröffentlichungstag der Anmeldung: 24.04.2024
(73) Patentinhaber: Friedrich, Thomas, 54470 Bernkastel-Kues (DE)
(72) Erfinder: Friedrich, Thomas, 54470 Bernkastel-Kues (DE)
(74) Vertreter: Riebling, Peter

(56) Entgegenhaltungen:
- EP-A2- 0 678 633
- DE-U1- 202012 004 408

## Beschreibung

Die Erfindung betrifft einen Massivabsorber mit einem thermischen Solarkollektor für Heizungs- und/oder Kühlzwecke in Gebäuden nach dem Oberbegriff des Patentanspruchs 1.

Thermische Sonnenkollektoren erreichen bei der Verwertung der Sonnenstrahlung relativ hohe Wirkungsgrade - typischerweise zwischen 60 und 75 %. In Europa fallen bei Sonnenschein je nach Jahreszeit und Sonnenstand zwischen 200 und 1000 W/m² ein. Der Sonnenkollektor ist der zentrale Bestandteil einer thermischen Solaranlage und wurde bis Anfang der neunziger Jahre meist nur zur Warmwasserbereitung genutzt, zunehmend findet auch eine Verwendung der Energie in der Raumheizung statt. In Verbindung mit einem Niedrigenergiehaus und einem Saisonwärmespeicher kann die Raumheizung sogar vollständig mittels Solarkollektoren erfolgen.

Werden mehrere Sonnenkollektoren parallelgeschaltet, müssen diese gemäß Tichelmann-System angeschlossen werden, um eine möglichst gleichmäßige Durchströmung sicherzustellen. Zentraler Bestandteil des Kollektors ist der Solarabsorber, der die Strahlungsenergie der Sonne in Wärme umwandelt und diese an einen ihn durchfließenden Wärmeträger abgibt. Mit Hilfe dieses Wärmeträgers wird die Wärme aus dem Kollektor abgeführt (z. B. über Wärmetauscher) und anschließend direkt verwendet oder gespeichert.

Die Erfindung betrifft insbesondere einen Massivabsorber, der Teil eines Bauwerks ist. Bei solchen Massivabsorbern wird eine massive Mauer, Wand- oder Dachfläche durch Solarstrahlung und Umgebungsluft erwärmt. Im Inneren des Bauteils verlaufen Rohrleitungen mit Wärmeträgerflüssigkeit. Die in der Flüssigkeit gespeicherte Wärmeenergie wird meist durch eine Wärmepumpe auf ein höheres Temperaturniveau gebracht.

Der vereinfachten Beschreibung wegen wird in der folgenden Beschreibung lediglich ein Heizungssystem für Gebäude beschrieben, obwohl sich die Erfindung auch auf ein Kühlsystem bezieht. Wenn also in der folgenden Beschreibung stets von einem Heizungssystem die Rede ist, kann damit auch ein Kühlsystem gemeint sein, denn das Wärmeträgermedium des thermischen Solarkollektors kann eine höhere Temperatur aufweisen, die zur Raumheizung des Gebäudes geeignet ist, jedoch auch eine niedrigere Temperatur, die zur Kühlung der Raumluft in Gebäude geeignet ist.

Zur Gewinnung von temperiertem Heizungswasser für Gebäude ist es bekannt, das Heizungswasser als Wärmeträger für Fußboden- oder Deckenheizungen in Gebäuden zu verwenden, jedoch auch als Wandheizung oder als separate Heizkörper, die in den Gebäuderäumen aufgestellt werden.

In der DE 20 2012 004 408 U1 wird ein Massivabsorber in modulare Bauweise beschrieben, der aus mindestens einem als Absorberbaugruppe ausgestalteten Betonelement besteht, in dessen Grundkörper Rohrleitungen angeordnet sind, die mit Umgebungsluft, dem Erdreich, dem Grundwasser oder dergleichen Wärmequellen in Wirkverbindung stehen, wobei der Transport der im Beton gespeicherten Umweltwärme über eine in den Rohrleitungen als Wärmeträger zirkulierenden Flüssigkeit erfolgt. Die Absorberkörper sind als freistehende Säulen ausgebildet, wobei auf einer Fußmatte insgesamt zwei bis vier säulenartige Absorberbaugruppen mit einer Höhe von etwa 0,5-2,0 m und einer Kantenlänge von 0,1-0,4 m montiert sind. Nachteil dieser Anordnung ist, dass der thermische Wirkungsgrad aufgrund der niedrigen Bauhöhe und der einfachen Ausgestaltung der einschaligen Betonkörper niedrig ist und eine Langzeitspeicherung der erfassten Energie nicht vorgesehen ist.

Massivabsorber im Säulen- oder Plattenformat, die in einiger Entfernung von dem zu versorgenden Gebäude freistehend aufgestellt sind, sind auch aus der DE 40 04 666 A1 oder den EP 0 840 074 B1 und EP 0 678 633 B1 bekannt. Es fehlt jedoch die Langzeitspeichermöglichkeit und die Massivabsorber sind auf die Versorgung mit elektrischer Fremdenergie angewiesen.

Zur Verwertung von Erdwärme sind aus der DE 10 2019 001 010 B3 fundamentgebundene Flächenabsorber bekannt, die im Erdreich eingebettet sind und in einer als Schüttgut ausgebildeten Wärmeleitschicht eingebettet sind. Die Sonnenenergie wird von als Rasensteinen ausgebildeten Betonkörpern erfasst, die in wärmeleitender Verbindung mit der Wärmeleitschicht sind. Neben dem niedrigen Wirkungsgrad fehlt es an einer Langzeitspeicherung der erfassten Wärmeenergie.

Einen solchen Stand der Technik beschreibt auch das DE 298 18 885 U1, bei dem ein Massivabsorber aus einem plattenartigen Betonfertigteilen besteht und in größerer Entfernung von einem Gebäude als Wandelement oder als geschlossenes oder offenes Zaunelement ausgebildet ist und mit der gebäudeseitigen Wärmetauschereinrichtung verbunden ist. Mit einer solchen Konstruktion lässt sich jedoch nur ein niedriger thermischer Wirkungsgrad erzielen. Es muss elektrische Fremdenergie zugeführt werden und eine Langzeit-Speichermöglichkeit ist nicht vorhanden.

Die DE 10 2017 124 617 B4 beschreibt die Herstellung eines industriell gefertigten Halbfertigteils, in das am Ort der Montage eine Ortbetonschicht eingebracht wird, in Verbindung mit einem nichttragenden Textilbetonteil, wobei die Textilbetonplatte mit eingelegten Kapillarrohren als Massivabsorber zur Wärmegewinnung genutzt wird.

In der auf den gleichen Anmelder zurückgehenden EP 3 460 351 B1 wird ein mobiles Luftklimagerät mit Latentwärmespeicher beschrieben. Es werden verschiedene PCM-Wärmespeichermedien beschrieben, die auch Gegenstand der vorliegenden Erfindungsbeschreibung sind.

Die DE 10 2015 122 886 A1 und DE 202 02 801 U1 zeigen Solarkollektoren zur thermischen Energiegewinnung für die Klimatisierung von Gebäuden, wobei an der Gebäudehülle Strahlungskonvektoren angeordnet sind, die als Absorberbleche mit zugeordneten Wärmetauschern ausgebildet sind, die dafür sorgen, dass die Sonnenenergie direkt über das Absorberblech auf die Wärmetauscher einwirkt.

Nachteil ist die notwendige Befestigung der Solarkollektoren an der Gebäudehülle und deren Versorgung mit elektrischer Fremdenergie, die aus dem Gebäudenetz entnommen wird.

Der einfacheren Beschreibung wird in der folgenden Beschreibung davon ausgegangen, dass es sich bei dem Wärmeträgermedium um Wasser handelt. Darauf ist die Erfindung jedoch nicht beschränkt. Es kann jedes beliebige Wärmeträgermedium verwendet werden, wie zum Beispiel auch ein Wärmeträgeröl, ein Gas oder dergleichen mehr.

Der Erfindung liegt deshalb ausgehend von der DE 20 2012 004 408 U1 die Aufgabe zu Grunde, einen freistehenden thermischen Massivabsorber für Heizungs- und/oder Kühlzwecke für Gebäude so weiter zu bilden, dass die thermische Energiegewinnung mit einem höheren Wirkungsgrad erfolgt und dass auch bei Ausfall oder Verminderung des solaren Energieeintrags die erfasste Wärmeenergie über einen längeren Zeitraum kontrolliert an das Gebäude abgegeben werden kann.

Zur Lösung der gestellten Aufgabe ist die Erfindung durch die technische Lehre des Anspruches 1 gekennzeichnet.

In einer bevorzugten Ausgestaltung ist vorgesehen, dass ausgehend von einem bekannten, freistehend vor einem Gebäude aufgestellten säulenartigen Massivabsorber, ein verbesserter thermischer Wirkungsgrad dadurch erreicht wird, dass der säulenartige Massivabsorber aus mehreren - vorzugsweise zueinander konzentrischen Schalen besteht, und dass in der äußersten ersten Schale ein mehrere Seiten des Massivabsorbers umfassender Blechabsorber zur Erfassung des Sonnenlichts angeordnet ist, welche seine Wärmeenergie an einen in einen ersten Pufferspeicher eingebetteten Primär-Wärmetauscher abgibt, der in einer zweiten Schale angeordnet ist.

Von besonderem Vorteil ist, dass eine dritte Schale des Massivabsorbers als mehrere Seiten des Massivabsorbers umfassende Dämmschicht ausgebildet ist, welche einen Speicherkern als vierte Schale umfasst.

Dabei wird es bevorzugt, wenn der die vierte Schale ausbildende Speicherkern aus einem tragenden Betonkörper besteht, in dessen randnahen Bereich die Rohre eines Sekundär-Wärmetauschers eingebettet sind, die eine mehrere Seiten des Betonkörpers umfassende fünfte Schale ausbilden, welche in ihrem Innenraum die Elemente eines Tertiär-Wärmetauschers umfassen, dessen Rohrstruktur in dem Material eines Latentwärmespeichers eingebettet ist.

Somit besteht der erfindungsgemäße Massivabsorber aus an der Außenseite angeordneten, thermische Solarkollektoren, die flüssigkeitsleitend mit im Innenraum der Säule angeordneten Wärmetauschern verbunden sind, die ihrerseits flüssigkeitsleitend in einem oder mehreren im Innenraum der Säule angeordneten Latentwärmespeichern eingebettet sind, sodass der so im Innenraum der Säule gebildete Wärmeträgerstrom flüssigkeitsleitend über Vor- und Rückläufe mit einem gebäudeseitigen Wärmetauscher verbunden ist, welcher das gebäudeseitige Wärmeträgermedium zur Heizung und/oder Kühlung des Gebäudes verwendet.

Es wird demnach eine freistehende, im genügenden Abstand vom Gebäude angeordnete Säule vorgeschlagen, in deren Innenraum die Elemente und Vorrichtungen zur Umwandlung der über die Solarkollektoren gewonnenen thermischen Energie angeordnet sind, sodass der dadurch gebildete Massivabsorber auch als Energiesäule bezeichnet wird, denn es handelt sich um eine effiziente Vorrichtung zur Umwandlung von Solarwärme in die thermische Wärme eines Wärmeträgermediums.

Dabei wird es bevorzugt, wenn die erfindungsgemäße Säule freistehend und ohne Abschattung auf einem Platz vor dem Gebäude aufgestellt wird. Der Charakter und das Aussehen der Säule können demnach mit einem klassischen Obelisken oder einer geraden Säule mit bevorzugt Quadrat- oder Rechteck- oder Oval- oder Rund-Querschnitt verglichen werden. Dabei können die sich zwischen den Kanten eines mehreckigen, langgestreckten Säulenkörpers befindlichen, der Sonnenbestrahlung ausgesetzten vertikalen Längsflächen in deren Längserstreckung in geraden Linien parallel zueinander verlaufen. In anderen Ausgestaltungen sind konisch sich zur Spitze hin verengende Längsflächen möglich, wie sie bei klassischen Obelisken bekannt sind. In anderen Ausgestaltungen können diese Längsflächen auch konvex oder konkav gewölbt sein. Ebenso ist es möglich, einen Säulenkörper (auch einen Dreieckskörper) mit unterschiedlich großen oder unterschiedlich geneigten Längsflächen zu gestalten. Jeder der hier angegebenen Säulenkörper kann auch auf einem erdgebundenen Fundament drehbar gelagert sein, um die bestrahlten Längsflächen optimal an die Bestrahlungssituation anzupassen.

Allen Ausführungen eines solchen säulenförmigen Massivabsorbers ist gemeinsam, dass dessen vertikale Flächen ohne Abschattung durch Bäume oder Gebäude Sonnenenergie aufnehmen können. Dabei wird es bei einem als Beispiel erwähnten Quadrat-Querschnitt des Massivabsorbers bevorzugt, wenn drei im Winkel von 90 Grad aneinander anschließenden, vertikalen Längsflächen der Säule nach Osten, Süden und Westen ausgerichtet sind und demnach - entsprechend dem Sonnenlauf - tagsüber eine vollständige Sonnenbestrahlung aller drei Flächen gegeben ist, während die vierte Seite (Nordseite) unbestrahlt ist und zur Anbringung von außen liegenden Aggregaten, Rohranschlüssen und dergleichen vorgesehen sein kann.

In einem bevorzugten Ausführungsbeispiel sind die Dimensionen (insbesondere Höhe und Größe der Bestrahlungsflächen) der Säule so gewählt, dass sie zur ausschließlichen thermischen Energieversorgung mit einem Heizträger- oder Kühlträgermedium für ein nach heutigem Standard gedämmtes Einfamilienhaus mit einer Wohnfläche von z.B. 150 qm verwendet werden können.

Versuche haben gezeigt, dass dabei bevorzugt ein säulenförmiger Massivabsorber mit Quadrat-Querschnitt und einer Kantenlänge von 80 × 80 cm bei einer Höhe im Bereich zwischen 8 bis 10 m ausreicht, um eine vollständige Energieversorgung eines solchen Einfamilienhauses für Heizungs- und Kühlzwecke über das gesamte Jahr zu ermöglichen, ohne dass das Gebäude noch zusätzliche Heiz- oder Kühlenergie benötigt. Solche Kleinkraftwerke sind bis zu einer Höhe von 10 Meter genehmigungsfrei.

Ursache für die Bereitstellung einer autarken Versorgung eines Einfamilienhauses ist, dass im Innenraum der Säule spezielle Langzeit-Latentwärmespeicher angeordnet sind, welche in der Lage sind, die von den Wärmetauschern der Solarkollektoren aufgenommene Wärmeenergie über einen sehr langen Zeitraum zu speichern, sodass eine Energieabgabe eines Wärmeträgermediums in ein daran angeschlossenes Haus auch über einen längeren Zeitraum von mehreren Wochen oder Monate möglich ist, auch wenn mangels Sonneneinstrahlung keine Solar-Energie erzeugt werden kann.

Bei der Erfindung kommt es demnach entscheidend auf die Speicherfähigkeit der Solarenergie in Form von Wärmeenergie an, um einen autarken Heiz- und/oder Kühlbetrieb des daran angeschlossenen Wohnhauses über mehrere Wochen oder Monate auch bei ausbleibender Sonnenenergie zu ermöglichen.

Dabei wurde erkannt, dass es vorteilhaft ist, weitere Langzeit-Latentwärmespeicher im Fundament der im Erdreich verankerten Säule anzuordnen, welche die Wärmeenergie-Speicherfähigkeit der in der Säule angeordneten Latentwärmespeicher vervielfachen und dadurch den sich über einen beliebig langen Zeitraum erstreckenden Wärme- oder Kältebedarf eines daran angeschlossenen Wohnhauses abdecken.

Demnach sieht die Erfindung eine Kombination eines säulenartigen Massivabsorbers mit darin angeordneten Latentwärmespeichern mit einem nach dem gleichen Prinzip arbeitenden weiteren Massivabsorber, der im Fundament integriert ist.

Somit sieht die Erfindung vor, dass - am Beispiel eines gedämmten Einfamilienhauses - ein solches Einfamilienhaus keine eigene Heiztherme, Solarkollektoren, Wärmepumpen oder andere innerhalb des Gebäudes angeordneten Heiz- oder Kühlvorrichtungen mehr benötigt. Stattdessen reicht eine außerhalb des Gebäudes aufgestellte, im Erdreich verankerter säulenartiger Massivabsorber aus, das Haus über das gesamte Jahr mit Wärme- und/oder Kälteenergie zu versorgen. Dies wird einerseits durch die thermischen Solarkollektoren an den Außenwänden der Säule und andererseits durch Langzeit-Latentwärmespeicher erreicht, die im Innenraum der Säule und - in einer Weiterbildung - auch im Fundament der Säule angeordnet sind.

Die Art und Konstruktion der bevorzugten, mit PCM-Material gefüllten Latentwärmespeicher ist aus der auf den eigenen Anmelder zurückgehenden EP 3 473 943 B1 zu entnehmen, deren Offenbarung vollinhaltlich von der Offenbarung der vorliegenden Erfindungsbeschreibung umfasst sein soll.

Grundsätzlich sieht die Erfindung deshalb vor, dass die im Innenraum der Säule angeordneten Energiespeichervorrichtungen miteinander verbunden sind, um nicht nur eine besonders günstige Kollektion von Sonnenergie tagsüber zu erreichen, sondern eine Langzeitwärmespeicherung über Tage, Wochen oder Monate zu gewährleisten. Dazu gehört auch, dass nicht nur das direkte Sonnenlicht zur Energiespeicherung verwendet wird, sondern auch das diffuse Tageslicht, welches in die Energiesäule einströmt und in besonderer Weise erfasst und über einen längeren Zeitraum gespeichert wird.

Langzeitwärmespeicher sind bisher nur in der Ausführung als großvolumige Wasserspeicher bekannt geworden. So wurde in einem Zeitungsartikel ein - bezüglich der Wärmeenergie - autarkes Einfamilienhaus mit einer Wohnfläche von 150 qm beschrieben, in dessen Gebäudehülle ein sich vom Keller bis zum Dach erstreckenden Warmwasserspeicher mit einer Höhe von 10 m, Kantenlängen von 100cm × 100cm und einem Fassungsvermögen von 10.000 Liter eingebaut ist. Damit geht wertvolle Wohnfläche verloren und das große Volumen des Langzeitwärmespeichers schränkt die Nutzung des Gebäudes ein. Das vermeidet die Erfindung.

Bei der Erfindung besteht der Vorteil, dass eine freistehende Energiesäule vollkommen unabhängig vom Gebäude ist und z.B. in einem Garten aufgestellt werden kann und aufgrund der Höhe und den Abmessungen dieser Energiesäule reicht es aus- entsprechend der verwendeten Höhe und den übrigen Abmessungen - ein komplettes Gebäude mit Heiz- und/oder Kühlwasser zu versorgen, welches über einen langen Zeitraum von Tagen oder Wochen zur Verfügung steht. Bei größeren Gebäuden können auch mehrere freistehende Energiesäulen verwendet werden.

Ein besonderer Vorteil der Erfindung ist in einer Weiterbildung, dass sie autark arbeitet, nämlich dass der Strom, der zum Betrieb der Umwälzpumpen und anderer elektrischen Aggregate gebraucht wird, durch zusätzliche auf der Säule befestigte elektrische Solarpaneele erzeugt wird.

Ebenso ist es in einer Weiterbildung vorgesehen, dass zur Erzeugung des für den Betrieb der Säule notwendigen elektrischen Stroms, eine Kombination von Solarpaneelen und einer Windturbine verwendet wird, um bei fehlendem Sonnenlicht gleichwohl Strom über die Windturbine zu erzeugen. Im Hinblick auf die autonome elektrische Energieerzeugung wird es bevorzugt, zusätzliche Stromspeicher (Akkus) in der Säule und/oder in deren Fundament anzuordnen.

Die Windturbine kann auf der Spitze der Energiesäule befestigt sein und dient vorzugsweise lediglich zur Stromerzeugung für die in der Säule angeordneten Umwälzpumpen und gegebenenfalls weiteren elektrischen Aggregaten.

In einer Weiterbildung der Erfindung ist es im Übrigen vorgesehen, dass der von der Windturbine und/oder in der Solarpanelle erzeugte Strom zusätzlichen Peltier-Elementen zugeführt wird, die - je nach ihrer Verschaltung - für eine zusätzliche Aufheizung oder Abkühlung des Wärmeträgermediums sorgen, worauf noch später eingegangen werden wird.

Die Energiesäule sammelt demnach nicht nur Strahlungswärme aus der Umgebung und aus dem direkten Sonnenlicht, sondern erhöht durch die hier geschilderten Maßnahmen (z.B. auch durch den später geschilderten Gewächshauseffekt) automatisch das Temperaturniveau zur Gewinnung von Wärmeenergie in der Säule. Die derart eingesammelte Wärme wird in der Säule direkt gespeichert und dient damit - in einer bevorzugten Weiterbildung - auch als Quelle für eine zusätzliche bedarfsweise eingesetzte elektrisch betriebene Wärmepumpe, die in der Säule integriert ist und die von dem - an und in der Säule - erzeugten Strom gespeist wird.

Die Säule besteht in einer ersten Ausführung bevorzugt aus einem tragenden Betonkörper, in dem die mit PCM-Material gefüllten Röhren und alle weiteren der Energiegewinnung dienenden Vorrichtungen eingegossen sind.

In einer zweiten Ausführung ist es vorgesehen, den Säulenkörper aus zwei Betonhalbschalen zu gestalten, die randseitig miteinander über Schrauben oder andere Verbindungsmittel verbunden sind und die in ihrem Innenraum die Elemente zum Betrieb der Energiegewinnung aufnehmen.

Die Säule aus tragendem Beton ist so konzipiert, dass über die Außenflächen die Wärmeenergie aus Strahlung aus der Umgebung absorbiert wird. Die Wärme wird über in der Säulen-Oberfläche angeordnete Absorber (Rohrleitungen) abgeführt und in den inneren Teil zur Speicherung geführt.

Die eintretende Strahlung wird durch die, den Betonaußenmantel umkleidende, vorgesetzte Glasfläche verstärkt aufgenommen. Dadurch ergibt sich ein luftgefüllter Zwischenraum zwischen der Innenseite der äußeren Glashülle und der Außenwand des Betonkörpers. Die Außenwand des Betonkörpers ist von Absorberblechen umkleidet, die in diesem Luftzwischenraum angeordnet sind, wobei sich der Luftzwischenraum wie bei einem Gewächshaus aufheizt und zu dem erwähnten Gewächshauseffekt führt, der für eine optimale Aufheizung der Absorberbleche führt.

Die äußere Oberfläche des Betonkerns der Säule ist demnach mit Absorbern und darin angeordneten Rohrleitungen verkleidet. Ergänzend sind die Rohrleitungen hinter der Absorberfläche in eine mit PCM gefüllte "Matte" eingebettet. Diese PCM-Matte dient als Pufferspeicher und speichert zuerst die Wärme, die dann zeitverzögert über die integrierten Rohrleitungen abgeführt wird. Damit wird die Ertragszeit verlängert und ermöglicht u.U. auch nach der ausbleibenden Strahlung (am Abend und in der Nacht) ein weiteres Sammeln von Wärmeenergie.

Ein Latentwärmespeicher (auch Phasenwechsel- oder PCM-Speicher) ist ein spezieller Typ von Wärmespeicher, der einen Großteil der ihm zugeführten thermischen Energie in Form von latenter Wärme (z. Bsp. für einen Phasenwechsel von fest zu flüssig) speichert. Die gespeicherte Wärme ist verborgen, da, solange die Phasenumwandlung nicht ganz abgeschlossen ist, die Temperatur eines Stoffes trotz Wärmezufuhr nicht weiter ansteigt. Latentwärmespeicher können daher in einem kleinen Temperaturbereich rund um den Phasenwechsel sehr große Wärmemengen speichern und übertreffen dabei Wärmespeicher, die nur die sensible Wärme eines Stoffes nutzen, wie etwa Heißwasserspeicher.

Da viele Stoffe mit unterschiedlichsten Schmelzpunkten als Phasenwechselmaterial (PCM) in Frage kommen, können viele Speicheranwendungen vom Kälte- bis zum Hochtemperaturwärmespeicher mit dieser Technik abgedeckt werden. Der Vorteil dieser Wärmespeichertechnik beruht darauf, in einem kleinen, durch die Schmelztemperatur des eingesetzten Speichermaterials festgelegten Temperaturbereich, viel Wärmeenergie in relativ wenig Masse zu speichern. Beim bloßen Erwärmen des Mediums wird dagegen ein größerer Temperaturbereich benötigt, um vergleichbare Wärmemengen zu speichern.

Als bevorzugtes PCM-Material wird in der vorliegenden Erfindung wachsartiges Paraffin verwendet.

Die mit PCM-Material gefüllten Rohre sind so ausgebildet, dass die Wärmeenergie aus der Umgebung über den Beton an das PCM-Material im Latentwärmespeicher geführt wird. Wärmeleitbleche im Inneren der Rohre dienen zur schnelleren Wärmeverteilung innerhalb des PCM-Latentwärmespeichers. Ergänzend ist im Rohrquerschnitt in der Mitte ein weiteres Rohr geführt, über das Wärme ebenfalls ein- und ausgeleitet wird. Damit wird die Be- und Entladung des PCM-Latentwärmespeichers rascher stattfinden. Zudem lassen die beiden Kreisläufe (Rohrregister im Beton; Rohrleitungen innerhalb der Röhren) auch getrennte Vorgänge zu. Damit kann parallel beladen und gleichzeitig entladen werden.

Wärmeenergie lässt sich auch in dem zur Säule gehörigen Fundament speichern. Das Betonvolumen ist ebenfalls mit einzelnen Rohrleitungen als Einbauteile bestückt. Die Wärmeenergie kann sowohl über die Wärmetauscher im Beton als auch über die Wärmetauscher in den Röhren eingefügt und abgeführt werden. Zudem erlaubt die in direktem Kontakt mit dem Erdreich stehende Oberfläche des Fundaments den Wärmeaustausch mit dem Erdreich. Dies erfolgt Ebenfalls über in der Oberfläche eingebaute Absorber. Die Rohrleitungen hinter der Absorberfläche sind wie bei der Säule in eine PCM-Matte eingebettet.

Die erfindungsgemäße Energiesäule ist nicht zwangsläufig darauf angewiesen, dass ein elektrischer Sonnenkollektor und/oder eine Windturbine vorhanden sind. Es kann in einer anderen Ausgestaltung vorgesehen sein, dass stattdessen Fremdenergie zugeführt wird, worauf die Erfindung in erster Linie jedoch nicht gerichtet ist. Sie ist vorteilhaft auf einen autarken Betrieb gerichtet, der darin besteht, dass die dargestellten Stromerzeuger einzeln oder in Kombination untereinander die erforderliche Energie für eine autarke Energieversorgung der Energiesäule bereitstellen.

In einfacheren Ausführungsformen kann es auch vorgesehen sein, dass die vorher erwähnte strombetriebene, mit Peltier-Elementen arbeitende Wärmepumpe entfällt, sodass lediglich die Energiesäule selbst und ihre sonstigen Einbauten vorhanden ist, deren Umwälzpumpe entweder mit Fremdenergie versorgt wird oder mit der Energie von zusätzlichen Aggregaten (z.B. Solarpanel), die an der Energiesäule angeordnet sind.

Ein bevorzugtes Ausführungsbeispiel der erfindungsgemäßen Energiesäule bezieht sich auf die Energieversorgung mit einem säulengenerierten Wärmeträgermedium, wobei von einem Einfamilienhaus ausgegangen wird, welches sowohl im Sommer gekühlt als auch im Winter geheizt werden soll. Bei einem solchen Anwendungsfall wird es bevorzugt, wenn die Energiesäule eine Höhe von ca. 10 Meter (+ oder - 2 Meter), und quadratische Kantenabmessungen von 80 × 80 cm und insgesamt einen quadratischen und rechteckigen Querschnitt hat, wobei die wärmestrahlungsaufnehmenden Außenflächen bevorzugt mit Glasscheiben abgedeckt sind, durch welche das Sonnenlicht hindurchstrahlen kann, um auf einen luftgefüllten Raum zu treffen, der innenseitig von Absorberblechen eingefasst ist, um nach dem Gewächshausprinzip, einen stark durch Sonnenlicht erhitzten Luftraum zu schaffen.

Die so vom Sonnenlicht oder der Umgebungsstrahlung im Luftraum erhitzten Absorberbleche geben ihre Wärme an eine ersten außenseitigen Mantel weiter, in dem ein rohrgeführter Primär-Wärmetauscher angeordnet ist.

Dabei wird es bevorzugt, wenn im äußeren Mantel, in dem der Primär-Wärmetauscher angeordnet ist, bereits schon eine erste Pufferschicht eines Latentwärmespeichers angeordnet ist, die bevorzugt mit einem PCM-Material arbeitet. Ebenso kann statt der PCM-Materialschicht auch eine Sandschicht, eine Wasserschicht oder dergleichen verwendet werden, weil diese Schicht lediglich als Pufferspeicher für den Primär-Wärmetauscher dient.

Ferner wird es in einer weiteren Ausführungsform bevorzugt, wenn sich in radialer Richtung innenseitig am Primär-Wärmetauscher eine Dämmschicht anschließt, die ringsum einen inneren Speicherkern umschließt und dämmt, in dem ein Sekundärwärmetauscher angeordnet ist.

Auch in diesem inneren Speicherkern wird ein Puffer- oder Speichermedium verwendet, insbesondere bevorzugt ein PCM-Material, worauf die Erfindung jedoch nicht beschränkt ist. Statt des PCM-Materials als Wärme- oder Pufferspeicher können auch andere Wärmespeichermedien verwendet werden, wie zum Beispiel Sand, Beton, Wasser oder andere Wärmeträgermedien, die ein hohes Wärmespeichervermögen aufweisen.

Schließlich ist in einer Weiterbildung der Erfindung vorgesehen, dass im Inneren Speicherkern ein tertiärer Wärmetauscher angeordnet ist. Dieser tertiäre Wärmespeicher besteht bevorzugt aus einer Vielzahl von parallel zueinander verlaufenden, im gegenseitigen Abstand zueinander angeordneten, röhrenförmigen Wärmetauschern, die jeweils ein zentrales mittiges, das Heizmedium führendes Rohr aufweisen, welches in einem Puffermedium eingebettet ist. Der tertiäre Wärmetauscher hat dabei den nachfolgend beschriebenen bevorzugten Aufbau.

Der spezielle Aufbau besteht darin, dass es sich um eine zeilen- und spaltenförmige Matrix aus quadratischen oder rechteckförmigen Metallrohren handelt, die bevorzugte Außenabmessungen von 8 × 8 cm oder 10 × 10 cm bei Längen bis zu 10 Meter aufweisen. In jedem Metallrohr sind innenliegende, radial auf eine zentrische Mittenachse nach innen gerichtete, sich in radialer Richtung einwärts konisch verengende Wärmeleitbleche angeordnet, die wärmeleitend an ein zentrales, innenliegendes Rechteck- oder Rundrohr angeschlossen sind. Das zentrale Rohr ist vom Wärmeträgermedium durchflossen. Durch die Art und Anordnung der symmetrisch im Innenraum jedes Metallrohres angeordneten Wärmeleitbleche ergibt sich eine hocheffiziente Wärmeübertragung von der Außenseite des Metallrohres auf das zentrisch im Innenraum angeordnete flüssigkeitsleitende Rohr.

Der Zwischenraum zwischen den Wärmeleitblechen ist bevorzugt mit einem Speichermedium gefüllt, insbesondere mit einem PCM-Material, aber auch - in abgewandelten Ausführungen - mit einem anderen Wärmespeichermedium wie z.B. Wasser, Sand, Beton oder dergleichen mehr. Neben der günstigen Wärmeübertragung vom Außenmantel des Metallrohres auf das zentrisch im Innenraum angeordnete flüssigkeitsleitende Rohr ist der weitere Vorteil, dass das die Zwischenräume der Wärmeleitbleche ausfüllende Wärmespeichermedium für eine Langzeitspeicherung der Wärmeenergie in den in Längsrichtung zur Säulenlängsachse verlaufenden und parallel zueinander angeordneten Metallrohren sorgt.

In einer Weiterbildung der Erfindung kann es vorgesehen sein, dass die vorher beschriebenen Elemente, die alle Teil einer Energiesäule in beliebiger Kombination untereinander, aber auch in jeder beliebigen Alleinstellung sind, ebenfalls in einem fundamentgebundenen Wärmespeicher angeordnet sein können. Das heißt, die Elemente, die vorstehend anhand der freistehenden Energiesäule geschildert wurden, können auch Teil eines fundamentgebundenen Speichers sein, wobei auch nur einzelnen Komponenten des vorher beschriebenen Energiesäule oder alle Komponenten in beliebiger Kombination untereinander Teile des Fundaments sein können.

Dabei ist vorteilhaft, dass der fundamentgebundene Speicher noch zusätzliche Speicherkapazität zur Verfügung stellt, die über die Speicherkapazität der Energiesäule hinaus geht.

Das führt dazu, das selbst wenn mehrere Tage ohne direkte Sonneneinstrahlungen vorhanden sind, es dann trotzdem möglich ist, das angeschlossene Gebäude mit Heiz- und Brauchwasser zu versorgen, ohne dass Hilfsheizungen verwendet werden müssen.

Die hier beschriebenen Energiesäule mit oder ohne zusätzlichen Fundamentspeicher kann auch für die Heizung von größeren Gebäuden verwendet werden, wie z.B. von Bürogebäuden. Hier kann es vorgesehen sein, dass auf jedem einzelnen Parkplatz eines Bürogebäudes eine solche Energiesäule aufgestellt wird, wobei nicht unbedingt die angegebene Höhe von 10 Metern erforderlich ist. In diesem Fall würden Höhen von 3 bis 6 Metern ausreichen, um eine ausreichende Heiz- und Warmwasserbereitung für Teile das Gebäude zu erzielen.

Der Abstand zwischen den auf den Parkplätzen parallel nebeneinanderstehenden Energiesäulen wird vorteilhaft so gewählt, dass sie sich nicht gegenseitig abschatten.

Ebenso muss die Anzahl und die Höhe der Energiesäulen derart aufeinander abgestimmt werden, dass die Energiesäulen parallel arbeiten, wobei von besonderem Vorteil ist, dass jede Energiesäule getrennt mit einzelnen Räumen eines Gebäudes verschaltet werden kann, um eine individuelle Heizwasser- oder Kühlwasserversorgung unterschiedlicher Räume des Gebäudes zu gewährleisten. Die unter dem Dach des Gebäudes liegenden Räume haben beispielsweise einen größeren Kühlbedarf aber einen geringeren Heizbedarf, während dies umgekehrt für die in Erdnähe befindlichen Räume gilt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von mehreren Ausführungswegen darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: Vergleich verschiedener bekannter Heizungssysteme (A, B) mit dem Heizungssystem (C oder D) nach der Erfindung.
Figur 2: Eine Vorderansicht einer erfindungsgemäßen Energiesäule
Figur 3: Eine perspektivische Ansicht einer Energiesäule in einer abgewandelten Ausführungsform.
Figur 4: Die Darstellung der einzelnen Komponenten der Energiesäule, die einzeln oder in beliebiger Kombination untereinander die erforderliche Heiztemperatur erbringen können.
Figur 5: Eine erste Ausführungsform der Anwendung einer Energiesäule für die Gebäudeheizung.
Figur 6: Eine gegenüber Figur 5 abgewandelte Ausführungsform, bei der noch zusätzlich ein Kühlaggregat vorhanden ist.
Figur 7: Der Querschnitt durch die Energiesäule in schematisierter Darstellung.
Figur 8: Die Darstellung der Funktionen der hier verwendeten PCM-Materialien in Bezug auf die Konstanthaltung der Temperatur bei Energieeintrag.
Figur 9: Isometrische Darstellung des in der Energiesäule verwendeten Tertiär-Wärmetauschers.
Figur 10: Das Metallgerüst des Tertiär-Wärmetauschers nach Figur 9.
Figur 11: Eine gegenüber Figur 10 ergänzte Zeichnung mit Darstellung der Einbettung des Tertiär-Wärmetauschers in einen Speicherkern.
Figur 12: Schematisierte Darstellung der Verschaltung des Sekundär- und des Tertiär-Wärmetauschers.
Figur 13: Ein Längsschnitt durch eine Energiesäule mit Darstellung weiterer Einzelheiten eines fundamentseitigen Wärmespeichers.
Figur 14: Querschnitt durch den Speicherkern der Energiesäule.
Figur 15: Eine ähnliche Zeichnung wie Figur 7 als Querschnitt durch die Energiesäule mit Darstellung weiterer Einzelheiten.
Figur 16: Ein Vertikalschnitt durch den fundamentseitigen Wärmespeicher mit Weglassung einzelner Teile.
Figur 17: Ein Längsschnitt durch die Energiesäule zusammen mit dem fundamentseitigen Wärmespeicher in einer gegenüber Figur 13 gedrehten Darstellung.

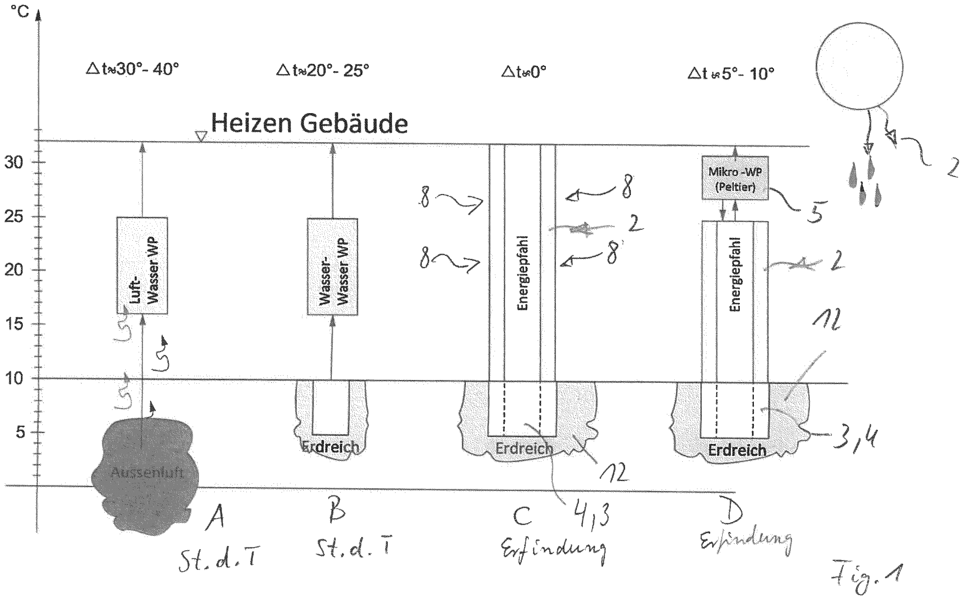

In Figur 1 werden verschiedene Heizsysteme miteinander verglichen, wobei das zum Stand der Technik gehörende Heizsystem A ein Temperaturgefälle der Außenluft im Bereich zwischen +7 Grad bis -3 Grad Celsius zeigt, das von einer elektrisch betriebenen Luftwasserwärmepumpe aufgeheizt werden muss, um das Heizwasser von etwa 32 Grad für die Heizung eines Gebäudes bereit zu stellen. Die Wärmepumpe muss demnach einen Temperaturunterschied von 30 bis 40 Grad Celsius überwinden.

Im zum Stand der Technik gehörenden System B in Figur 1 soll die Wärme des Erdreichs im Temperaturbereich zwischen +6 bis +10 Grad Celsius mit einer elektrisch betriebenen Wärmepumpe genutzt werden. Die Wärmepumpe muss deshalb einen Temperaturunterschied von etwa 20 bis 25 Grad Celsius überwinden, was mit der Zuführung von hoher elektrischer Energie verbunden ist.

Nach einer ersten Ausführungsform der Erfindung entsprechend dem Modell C in Figur 1 wird eine von Sonnenstrahlen 8 und Umgebungsstrahlen bestrahlte Energiesäule 2 bereitgestellt, die lediglich im Erdreich 12 verankert ist, ohne dass - in diesem Ausführungsbeispiel - aus dem Erdreich 12 noch zusätzliche Energie gewonnen wird. Die Energiesäule 2 ist im Modell C mit einem neutralen Fundament im Erdreich verankert.

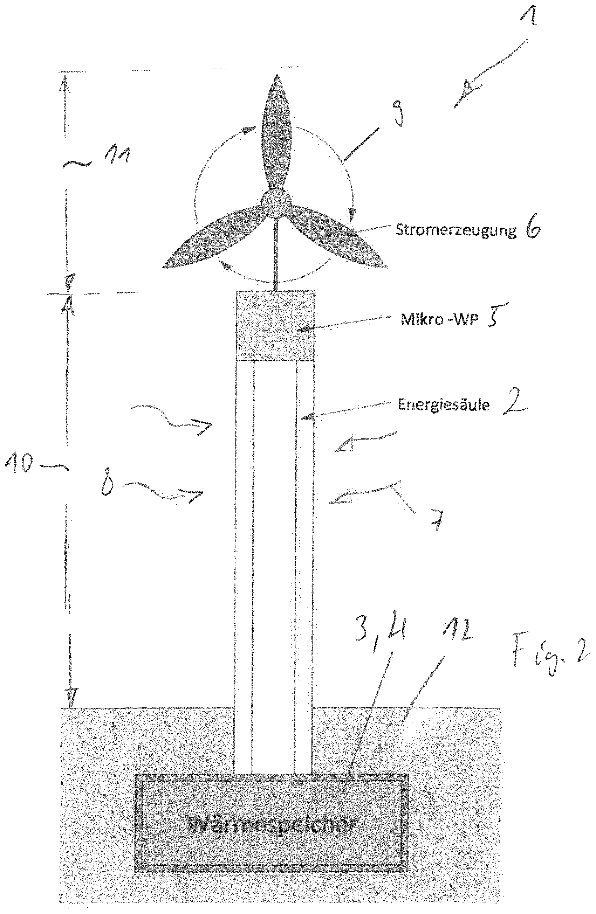

In einer in Figur 2 gezeigten Weiterbildung kann es nach dem Modell C und D in Figur 1 vorgesehen sein, dass ein aktives Fundament 3 mit Wärmespeicher 4 im Erdreich 12 eingebaut ist, um mit dem Fundament 3 zusätzlich einen Wärmespeicher 4 bereit zu stellen, der in der späteren Beschreibung noch näher beschrieben wird.

Die Erfindung bezieht sich demnach auf eine freistehende Energiesäule, die entweder mit (Fig. 2) oder ohne (Fig.1 C oder D) einen fundamentseitigen Wärmespeicher 4 arbeitet.

Dabei ist im oberen Abschnitt der Figur 1 bei der Temperaturlinie von +32 Grad Celsius dargestellt, dass beim Modell C keine Temperaturdifferenz (Delta t=0) mit zusätzlichen elektrischen Mitteln überwunden werden muss. Im Modell C wird dabei bevorzugt eine Säule 2 mit einer aktiven Höhe zwischen 8 bis 12 Meter verwendet.

Wenn hingegen niedrigere Säulenhöhen im Bereich von 4 bis 8 Meter gewünscht sind, kann es vorgesehen sein, eine zusätzliche elektrisch betriebene Mikrowärmepumpe nach dem Peltier-Prinzip zu verwenden, deren elektrische Energie von den säuleneigenen Stromerzeugern bereitgestellt wird. Diese Stromerzeuger sind die Windturbine 7 und/oder das Solarpanel 13.

Auch in diesem Fall arbeitet die Energiesäule nach dem Model D autark und kann freistehend in einer Landschaft aufgestellt werden.

Das Modell D in Figur 1 zeigt demnach, dass mit Einsatz der elektrisch betriebenen Wärmepumpe 5 eine Temperaturdifferenz von nur noch 5 bis 10 Grad Celsius überwunden werden muss, was besonders vorteilhaft ist, weil damit ein autarker Betrieb auch bei niedriger Energiegewinnung durch die Energiesäule 2 möglich ist.

Die Figur 2 zeigt als bevorzugtes Ausführungsbeispiel alle Kombinationselemente eines solchen Miniaturkraftwerks 1, welches autark arbeitet. Es handelt sich sozusagen um die Vollausstattung. In dem gegenüber abgespeckten Versionen wird nicht voraussetzt, dass mit der durch Windenergie 9 angetriebenen Windturbine 6 und/oder eine mit elektrisch betriebenen Peltier-Elementen arbeitende Wärmepumpe 5 vorhanden ist. Demnach können in einfacheren Ausgestaltungen sowohl die Windturbine 6 aber auch die elektrisch betriebene Wärmepumpe 5 entfallen.

Ebenso zeigt die Figur 2 die Vollausstattung des Miniatur-Kraftwerks 1 mit einem im Erdreich 12 angeordneten Wärmespeicher 4, der im Fundament 3 verankert ist. Auf diese Art der Speicherung des Heizmediums wird später noch eingegangen. Es wird betont, dass der fundamentseitige Wärmespeicher 4 auch entfallen kann, für einen autarken Langzeitbetrieb der Energiesäule 2 aber vorteilhaft ist.

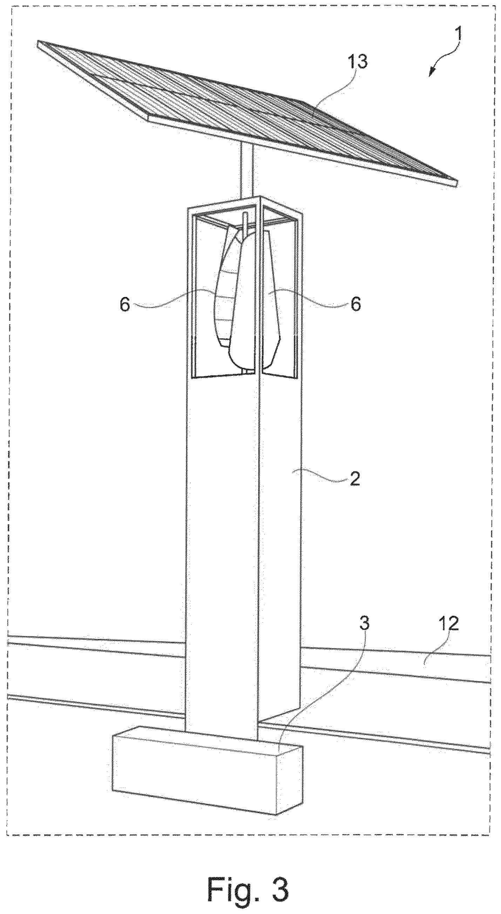

Die Figur 3 zeigt räumlich eine abgewandelte Ausführungsform eines Miniatur-Kraftwerks 1, wo erkennbar ist, dass die Energiesäule 2 ein Rechteck oder Quadratquerschnitt aufweist und bevorzugte Kantenlängen von 80 × 80 cm hat und dabei mit einem im Erdreich 12 verankerten Fundament 3 verbunden ist, in dem der Wärmespeicher 4 integriert ist. Ferner ist dargestellt, dass anstatt der mit Flügel betriebenen Windturbine 6 nach Figur 2 nunmehr eine mit Rotoren betriebene Windturbine 6 verwendet wird und dass ein zusätzliches Solarpanel 13 vorhanden, welches den Strom für die Umwälzpumpen und eventuell für die elektrisch zu betreibende Wärmepumpe 5 zur Verfügung stellt. Aus Vereinfachungsgründen sind keine elektrischen Speicher (Akkus) dargestellt.

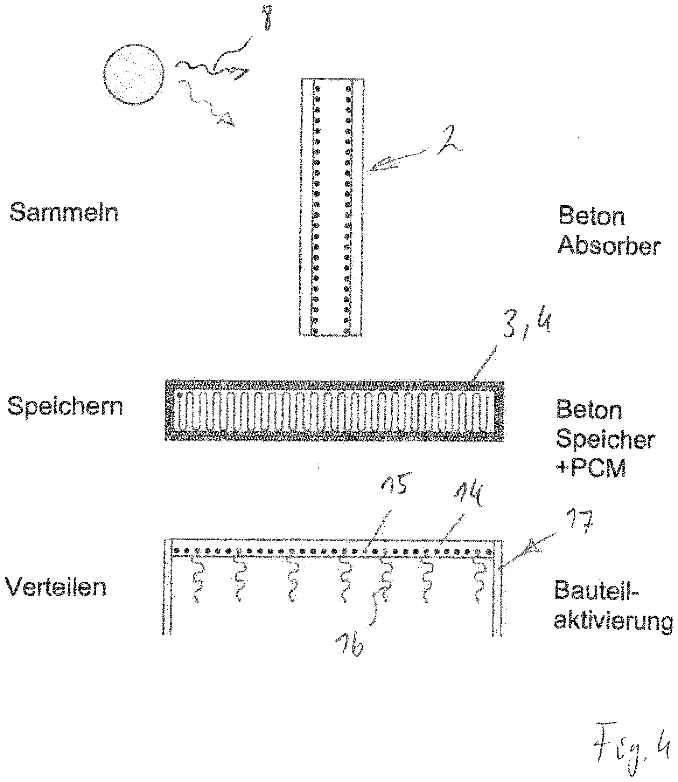

Die Figur 4 zeigt die Kombination der verschiedenen Wärmeerzeugungs- und Wärmespeicherfunktionen, wo erkennbar ist, dass von den Sonnenstrahlen 8 zunächst die Sonnenenergie in der Energiesäule 2 gespeichert wird und danach in den fundamentseitigen Wärmespeicher 4 eingeleitet wird.

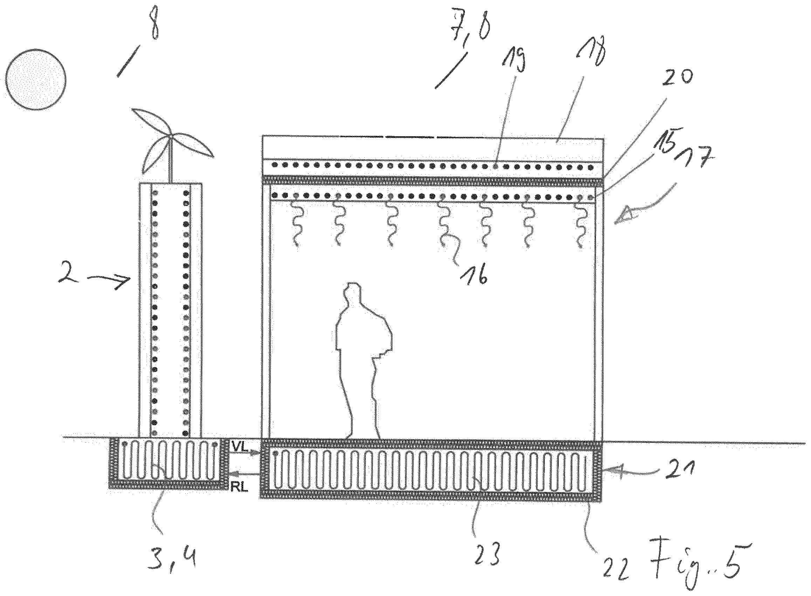

Die so erzeugte Heizenergie in Form eines aufgeheizten Heizmediums wird dann gemäß Figur 5 einem Gebäude 17 zugeführt, wobei beispielsweise in der Gebäudedecke 14 Wärmetauscher 15 angeordnet sind, die von dem von der Energiesäule 2 erzeugten Heizwasser durchströmt sind, um so Wärmeenergie 16 in den Innenraum eines Gebäudes abzugeben.

Am Beispiel der in der Figur 2 und 3 dargestellten Ausführungsformen der Energiesäulen kann festgestellt werden, dass eine Anlagenhöhe 10 von bevorzugt 6 bis 10 Metern vorgesehen ist und eine Turbinenhöhe 11 von bevorzugt 2 Metern angegeben werden kann.

Die Figur 5 zeigt eine solche Gebäudeheizung wie sie anhand der Komponenten in Figur 4 dargestellt wurde, wo erkennbar ist, dass die Energiesäule 2 mit ihrem fundamentseitigen Wärmespeicher 4 über Vorlauf- und Rücklaufleitungen mit einem gebäudeseitigem Wärmespeicher 21 verbunden sind, der beispielsweise im Gebäudefundament angeordnet ist, um an zusätzliches Speichermedium zu bilden. Der Gebäudewärmespeicher 23, der hier als Rohrwärmetauscher ausgebildet ist, muss jedoch nicht in dieser Form im Fundament des Gebäudes 17 eingebaut sein. Es kann auch jeder beliebige Kessel verwendet werden, der im Gebäude steht. Es handelt sich deshalb nur um eine bevorzugte raumsparende Anordnung, bei der der Gebäudewärmespeicher 21, 23 im Gebäudefundament 22 integriert ist.

Auch hier ist noch zusätzlich dargestellt, dass im Bereich des Gebäudedaches ein Strahlungskonvektor 18 zum Einfangen der Strahlungsenergie 7 der Sonnenstrahlen 8 verwendet werden kann, um einen ersten gebäudeseitigen Dach-Wärmetauscher 19 aufzuheizen, der jedoch thermisch getrennt über eine Dämmung 20 von einem weiteren gebäudeseitigen Wärmetauscher 15 getrennt ist, sodass die auf den dachseitig einstrahlenden Dach-Wärmetauscher eintreffende Sonnenenergie auch getrennt von der Raumheizung verwendet werden kann.

Der im Innenraum des Gebäudes angeordnete weitere Gebäude-Wärmetauscher 15 wird dann von der erfindungsgemäßen Energiesäule 2 mit Heizwasser versorgt bzw. auch gekühlt.

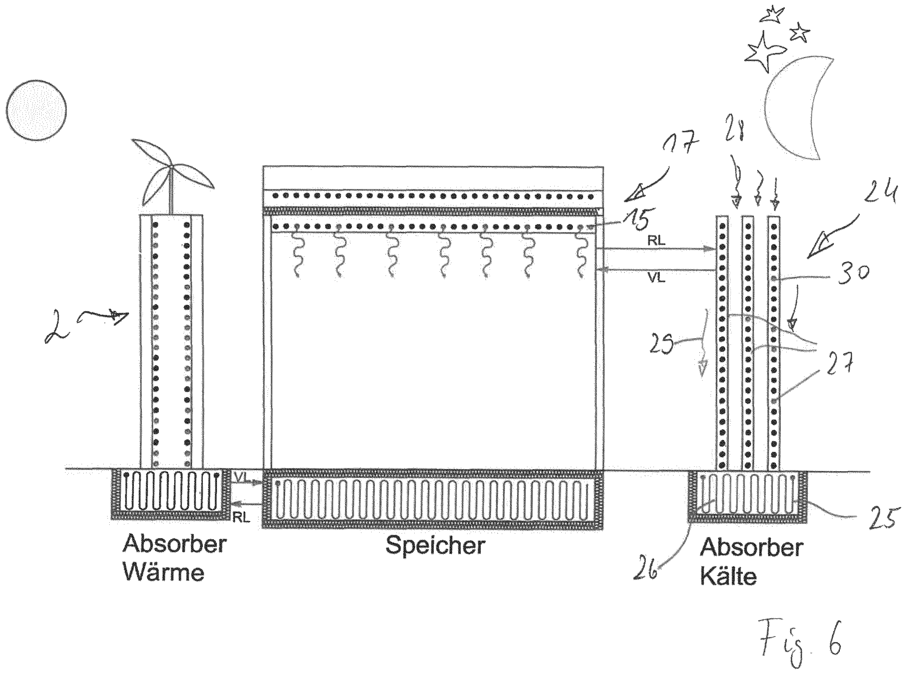

Ein neben dem Heizkreislauf vorhandener Kühlmechanismus ergibt sich aus Figur 6, wo dargestellt ist, dass neben der Erzeugung von Heizwasser auch Kühlwasser erzeugt werden kann. Die Speicherung des Kühlmediums erfolgt mit den gleichen Langzeit-Latentwärmespeichern, wie sie vorstehend für den Heizkreislauf beschrieben wurden.

Ein solcher Kälte-Wärmespeicher 26 mit einem über Verdunstungskälte arbeitenden Kühlmedium arbeitet dabei wie folgt:
In einem Kältefundament 25 kann dabei der das Kältemedium tragende Kälte-Wärmespeicher eingebaut sein, der dadurch gekühlt wird, dass eine Vielzahl von parallel und im gegenseitigen Abstand zueinander angeordneten Rieselplatten 27 vorhanden sind, die eine Kältesäule 24 bilden. In jeder Rieselplatte 27 sind Rohrschlangen als Kälte-Wärmetauscher 30 angeordnet, die das Kältemedium führen.

Es wird nun Wasser 28 auf die Oberseite der Rieselplatten 27 gegeben, welches in Pfeilrichtung nach unten fliest und Verdunstungskälte 29 auf den Rieselplatte 27 erzeugt, welche auf die plattenseitigen Wärmetauscher 30 einwirkt, der mit dem im Kältefundament 25 angeordneten Wärmespeicher 26 verbunden ist.

Das Kältemedium wird über eine Vorlauf-Rücklaufleitung in den raumseitigen Wärmetauscher 15 eingeführt und über entsprechende, nicht näher dargestellte Austauschmedien in die Raumluft eingespeist.

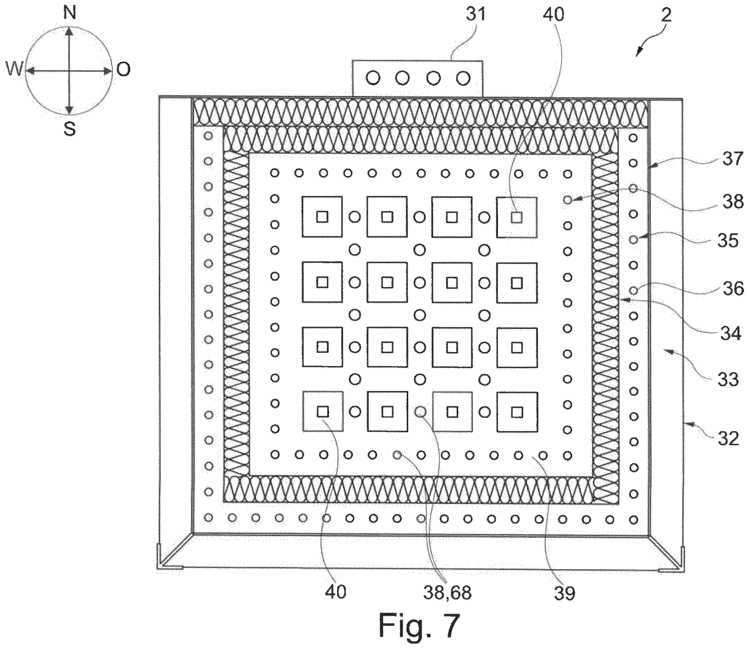

Die Figur 7 zeigt als bevorzugte Ausführungsform einen Querschnitt durch eine Energiesäule 2, deren Außenseiten an 3 Seiten die Sonnenstrahlung ausgesetzt sind. Dabei muss die Nordseite nicht unbedingt mit einem Sonnenkollektor versehen sein. Es können jedoch auch an dieser Seite Wärmekollektoren angeordnet sin, um Strahlungswärme aus der Umgebung aufzunehmen. An der Nordseite können die Versorgungsleitungen 31 angeordnet sein.

Die Energiesäule 2 besteht im Querschnitt im Wesentlichen aus äußeren, die Hülle der Energiesäule 2 bilden den Glasscheiben 32, die Sonnenlichtdurchlässig sind und die einen dahinterliegenden Luftspalt 33 abgrenzen, der luftdicht abgeschlossen ist und der in der Art einer Gewächshausluftschicht eine hohe Lufttemperatur führt.

Innenseitig ist der Luftspalt 33 durch einen Blechabsorber 37 begrenzt, der sich aufgrund der hohen im Luftspalt 33 herrschenden Lufttemperaturen auf über 120 Grad aufheizen kann. Die Wärme wird auf eine erste innenliegende Schicht durch Wärmeleitung und -strahlung übertragen. Die Schicht besteht im Wesentlichen aus einem mantelförmigen, die drei Seiten der Säule über die gesamte Höhe umkleidenden Pufferspeicher 35, der bevorzugt mit einem PCM-Material gefüllt ist. Entsprechend der eigenen EP 3 437 943 B1 ist das PCM-Material 57 z.B. ein Wachsspeicher, der sein Aggregatzustand bei sehr niedrigen Temperaturen von flüssig in kristallin ändert, wodurch starke Energieübergänge möglich sind, wie sie bei Wasserspeicher oder Sandspeichern nicht gegeben sind. Die Erfindung ist jedoch nicht auf das PCM-Material 57 für den Pufferspeicher 35 angewiesen.

In der anderen Ausführungsform kann es vorgesehen sein, dass dieser den Betonkörper der Säule umgebende Mantel auch mit Sand oder Wasser gefüllt ist. Die Verwendung von PCM-Schicht als Pufferspeicher 35 wird jedoch bevorzugt. In dieser mantelförmigen Schicht des Pufferspeichers 35 ist ein Primär-Wärmetauscher 36 angeordnet, der aus einer Anzahl von flüssigkeitsleitend miteinander verbundenen Rohrleitungen besteht, die hier im Schnitt dargestellt sind. Der Anschluss der Rohrleitungen ides Primär-Wärmetauschers 36 wird getrennt nach außen geführt und kann mit den anderen Anschlüssen der anderen Wärmetauscher 38 und/oder 40 entweder kombiniert werden oder gesondert ausgeführt werden.

An der Innenseite des Pufferspeichers 35 schließt sich eine mantelförmige Dämmung 34 an, die sich über die gesamte Höhe der Säule 2 erstreckt und die einen innenliegenden, im Querschnitt quadratischen Speicherkern 39 umschließt, der ebenfalls mit einem Pufferspeichermaterial, bevorzugt PCM-Material gefüllt ist. Statt der Füllung mit einem PCM-Material kann auch hier ein anderes Pufferspeichermaterial verwendet werden, wie z.B. Wasser oder Sand.

In diesem Speicherkern 39 ist wärmeleitend ein Sekundär-Wärmetauscher 38 eingebettet, der ebenfalls außer an der Vielzahl von flüssigkeitsleitend miteinander verbundenen Rohren 68 besteht.

Als Rohrquerschnitt wird beispielsweise ein Durchmesser im Bereich zwischen 10 bis 20 mm bevorzugt.

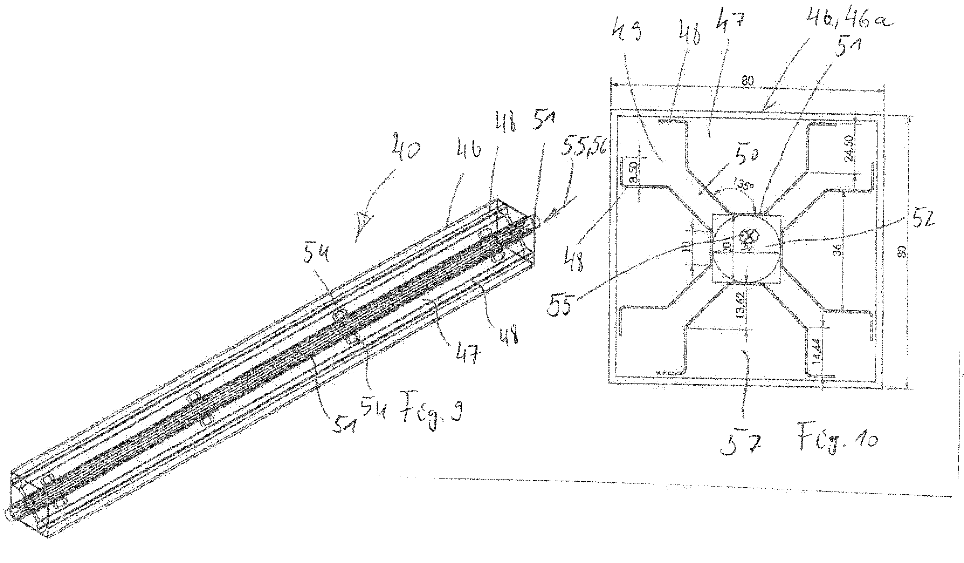

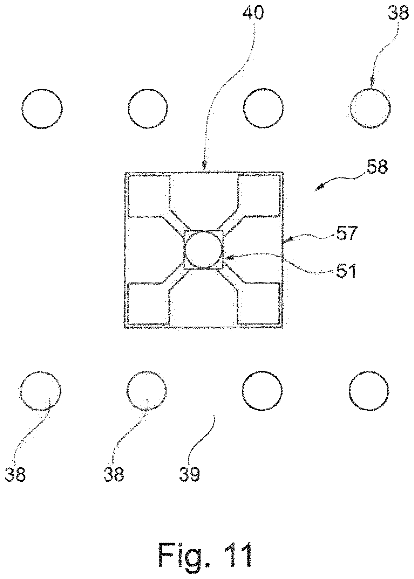

Nach einer Weiterbildung der vorliegenden Erfindung ist vorgesehen, dass im Speicherkern 39 mit dem Sekundär-Wärmetauscher 38 noch Tertiär-Wärmetauscher 40 wärmeleitend eingebettet ist. Der Aufbau des Tertiär-Wärmetauschers 40 mit dem zentralen Mittenrohr 51 ist aus den Figuren 9 und 11 zu entnehmen.

Der in das Speichermedium des Sekundär-Wärmetauschers 38 wärmeleitend eingebettete Tertiär-Wärmetauscher 40 ist ein zusätzliches Speichermedium eines Langzeit-Latentwärmespeichers.

Es wird darauf hingewiesen, dass in vereinfachten Ausführungsformen der Tertiär-Wärmespeicher 40 mit seinen zueinander parallelen und im gegenseitigen Abstand zueinander angeordneten Mittenrohren 51 auch entfallen kann und nur der Sekundärwärmespeicher im Speicherkern 39 vorhanden sein kann. Weil aber die erfindungsgemäße Energiesäule 2 mit hohem Wirkungsgrad und einem Langzeit-Latentwärmespeicher arbeitet, wird die Anordnung derartiger Tertiärer-Wärmetauscher 40 bevorzugt.

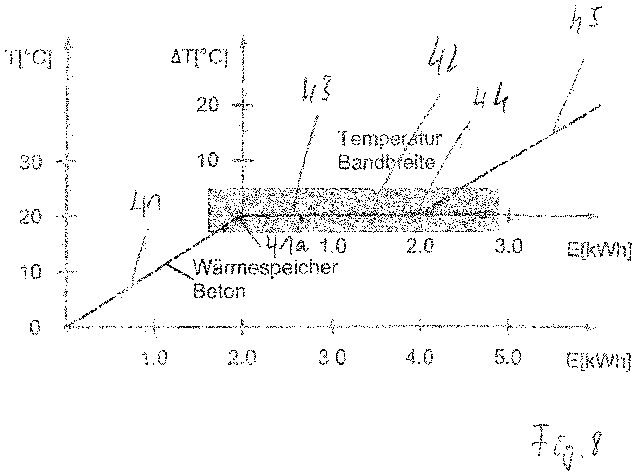

Die Figur 8 zeigt die bevorzugte Energiespeicherfähigkeit derartiger Puffermedien, die mit PCM-Material arbeiten. Dabei sind auf der Abszisse die Energiespeicherfähigkeit des Speichermediums und auf der Ordinate die Temperatur des Speichermediums aufgetragen.

Bei der Aufheizung des Betonkerns der Säule 2 wird ab der Temperatur von 0 Grad Celsius ansteigend bis zu etwa 20 Grad C die lineare Anlauflinie 41 durchlaufen, wobei in diesem Bereich zunächst der Beton als Wärmespeicher dient. Ab dem Scheitelpunkt 41a der Anlauflinie 41 kommt das PCM-Material in Einsatz, wobei das Speichervermögen entlang der horizontalen Geraden 43 verläuft. Dies erfolgt im Bereich einer Temperatur-Brandbreite 42. Würde der PCM-Speicher nicht vorhanden sein, dann würde die Anlauflinie 41 bezüglich des Beton-Wärmespeichers einfach über den Scheitelpunkt 41a hinaus verlängert werden. Durch die Anwendung des PCM-Materials bleibt es jedoch bei einem gleichbleibenden Energiespeichervermögen im Bereich einer Temperaturbandbreite 42 von etwa 5 Grad Celsius. Somit können solche PCM-Latentwärmespeicher große Energiemengen unabhängig von der Speichertemperatur speichern.

Erst ab Überschreitung eines gewissen Energieeintrags beim Punkt 44 setzt sich dann die Speicherlinie in Form einer schräg nach oben verlaufenden Gerade 45 fort.

In diesem Beispiel ist gezeigt, dass in einem relativ weiten Temperaturbereich eine gleichmäßige Speicherung einer eingetragenen Energie möglich ist, ohne die Temperatur des Speichermediums wesentlich zu erhöhen. Dies ist der Vorteil des PCM-Materials.

Die Figuren 9 und 10 zeigen den prinzipiellen Aufbau des Tertiären-Wärmetauschers 40, der im Wesentlichen gemäß Figur 10 aus einem geschlossenen Metall-Hohlprofil mit Rechteckquerschnitt mit bevorzugten Abmessungen von 80 × 80 cm besteht. Der metallische Außenmantel 46 schließt in seinem Innenraum eine Metallprofilkonstruktion ein, die aus einer Anzahl von sich über die gesamte Höhe des Tertiär-Wärmetauschers 40 erstreckenden abgewinkelten Wärmeleitblechen 48 besteht, die den Innenraum 47 des Außenmantels 46 ausfüllen und mit ihren radialen äußeren Enden wärmeleitend an der Innenseite des Außenmantels 46 liegen sind.

Dabei wird es bevorzugt, wenn sich die Wärmeleitbleche 48 diagonal in die Eckenbereiche des Außenmantels 46 erstrecken und dort radial äußere, erweiterte Leitkanäle 49 bilden, die sich - radial einwärts gesehen - in schmalere Kanalquerschnitte 50 verengen, deren radial einwärts gerichtete Enden wärmeleitend am Außenumfang eines metallischen Mittenrohrs 51 angeschlossen sind.

Das Mittenrohr 51 hat bevorzugt einen Quadratquerschnitt, weil dabei ein besonders günstiger, wärmeleitender Anschluss der radial einwärts auf das Mittenrohr 51 gerichteten Enden der Wärmeleitbleche 48 gewährleistet ist. Das metallische Mittenrohr 51 führt in seinem Innenraum das Heizwasser 56.

Die Profilgebung der Wärmeleitbleche 48 und die hieraus gebildeten Kanäle haben die Aufgabe, die am Außenmantel 46 des Tertiär-Wärmetauschers 40 anliegende Wärmeenergie möglichst effizient und konzentriert auf das die Mittenachse ausfüllende Mittenrohr 51 zu konzentrieren und gleichzeitig das Material des Latentwärmespeichers zu erwärmen, das den gesamten Innenraum 57 des Tertiär-Wärmespeichers 40 ausfüllt. Dadurch wird die am Außenmantel 46 anliegende Wärmeenergie konzentriert auf das das Heizwasser 56 führende zentrale Mittenrohr 51 geleitet und gleichzeitig sorgen die großflächigen, wärmeleitenden Berührungsflächen der abgewinkelten Wärmeleitbleche48 für eine besonders effektive Wärmeübertragung auf das den Innenraum 47 ausfüllende Latentwärmespeicher-Medium (PCM-Material 57).

Das Heizwasser 56 fließt dabei in Figur 9 und 10 in Pfeilrichtung 55 durch das zentrale Mittenrohr 51.

Dabei wird es bevorzugt, wenn der gesamte Innenraum 47 des Tertiären-Wärmetauschers 40 mit dem PCM-Material 57 spaltfüllend gefüllt ist, wobei es zur Erreichung einer zirkularen Strömung des wachsartigen PCM-Materials bevorzugt wird, wenn in den Wärmeleitblechen 48 Durchströmlöcher 54 vorhanden sind, die für eine umlaufende Strömung des Wärmeträger- und Speichermediums sorgen.

Das in Figur 10 eingezeichnete Rundprofil im Innenraum des quadratischen Mittenrohrs 51 deutet an, dass statt eines Rechteckprofils auch ein Rundprofil verwendet werden kann. Allerdings ist dann der wärmeleitende Anschluss der radial einwärts gerichteten Enden der Wärmeleitbleche 48 an das zentrale Mittenrohr 51 erschwert.

Die Figur 11 zeigt die Einbettung des Tertiären-Wärmetauschers 40 in den Speicherkern 39 der Säule 2, der bevorzugt mit Beton 58 gefüllt ist. In diesem Beton 58 sind die Rohre des Sekundär-Wärmetauschers 38 eingebettet und wärmeleitend mit dem Beton verbunden. Die Figur 11 zeigt auch die Einbettung oder Umkleidung des Tertiären-Wärmetauschers 40 in den Speicherkern 39.

Dabei ist die Verbindung der Wärmeleitbleche48 mit dem zentralen quadratischen Mittenrohrrohr 51 erkennbar, welches von dem Heizmedium 56 in senkrechter Richtung zur Figur 11 durchflossen ist. Der gesamte Innenraum des Tertiären-Wärmetauschers 40 ist - wie oben ausgeführt - spaltfüllend mit dem wachsartigen PCM-Material 57 gefüllt.

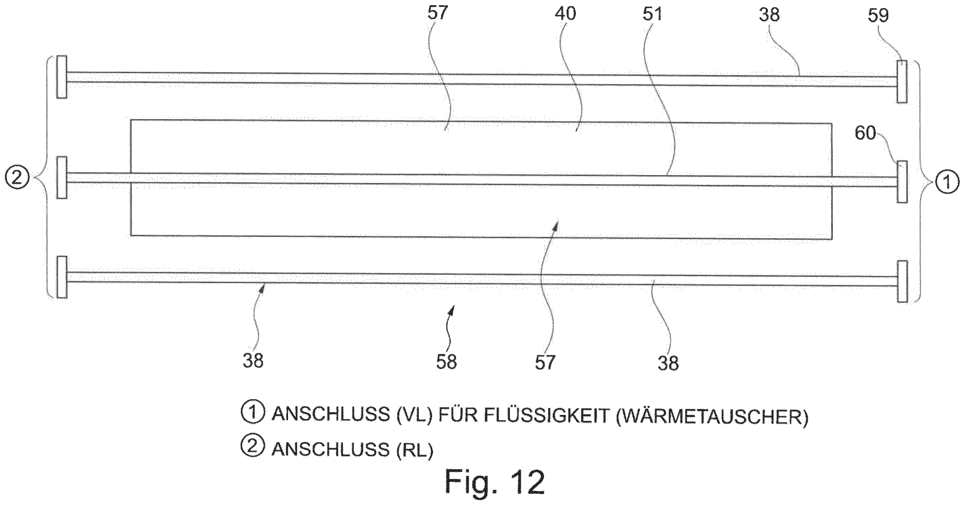

Die Figur 12 zeigt einen Längsschnitt durch den Tertiär-Wärmetauscher 40 entsprechend der Figur 11, wo erkennbar ist, dass die außenliegenden Sekundär-Wärmetauscherrohre 38 parallel zueinander verlaufen und getrennt nach außen geführt sind, wo sie bei Bedarf miteinander flüssigkeitsleitend in Serien- und/oder Parallelschaltung miteinander verbunden werden können.

Auch die im Tertiären-Wärmetauscher 40 verlaufenden zentralen Mittenrohre 51 sind getrennt voneinander nach außen geführt und können wahlweise in Serien- und/oder Parallelschaltung mit den Anschlussseiten des Sekundär-Wärmetauschers 38 verbunden werden.

Sie können jedoch separat herausgeführt und flüssigkeitsleitend mit externen separaten Anschlüssen verbunden werden.

Die gesamte Anordnung aus Sekundär- 38 und Tertiär-Wärmetauscher 40 ist in den Beton 58 eingebettet, was den Vorteil eines selbsttragenden stabilen Aufbaus hat, ohne weitere Stützelemente zu benötigen. Die wärmeleitende Funktion des Betons wird deshalb gleichzeitig als Stützfunktion genutzt.

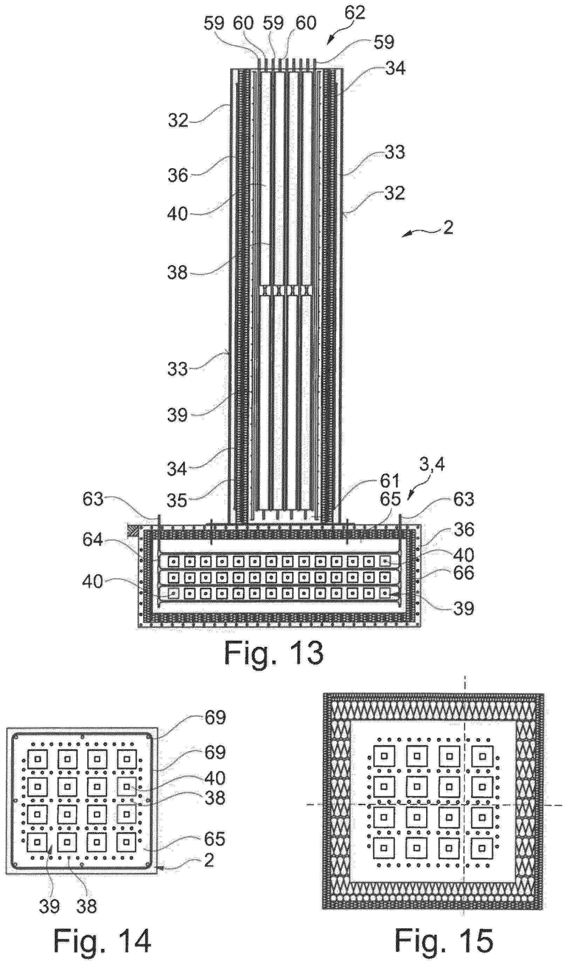

In Figur 13 ist ein Längsschnitt durch eine vollständige Energiesäule 2 entsprechend der linken Seite in Figur 6 dargestellt, wobei die einzelnen Teile, die bereits schon anhand Figuren 7 bis 12 erläutert wurden, nunmehr auch im Fundament 3 angeordnet sind. Für die dort dargestellten Teile gelten die gleichen Erläuterungen.

Es ist dargestellt, dass die vertikal freistehende Energiesäule 2 fest mit dem bodenseitig verankerten Wärmespeicher 4 und dessen Fundament 3 verankert ist.

Daraus ergibt sich analog zur Erläuterung der Figur 7 , dass die Rohe 59 des Sekundär-Wärmetauschers 38 getrennt von den Rohren 60 des Tertiär-Wärmetauschers 60 an der Spitze des Säule 2 herausgeführt sind und einen oberen Rohranschluss 62 bilden, wobei die verschiedenen Rohre 59, 60 immer abwechselnd herausgeführt sind und in beliebiger Weise flüssigkeitsleitend miteinander verschaltet und/oder separat geführt werden können.

Die gleiche Erläuterung gilt auch für den fußseitigen Teil der Säule 2, wo ein bodenseitiger Rohranschluss 61 vorhanden ist. Der bodenseitige Rohranschluss 61 kann dabei mit den Rohranschlüssen eines fundamentseitigen Wärmespeichers 4 verbunden sein oder auch nicht. Im gezeigten Ausführungsbeispiel sind die Rohre noch nicht im verschalteten Zustand gezeigt, sodass erkennbar ist, dass der fundamentseitige Wärmespeicher 4 in der genau gleichen Weise ausgebildet ist wie die anhand der Figuren 7 bis 12 erläuterten Komponenten in der stehenden Energiesäule 2. Das heißt, dass im fundamentseitigem Wärmespeicher 4 ebenfalls ein Beton-Speicherkern 39 mit einem darin eingebetteten Tertiär-Wärmespeicher 40 entsprechend der Figur 7 vorhanden ist, der mit PCM-Material 57 gefüllt ist. Dies ist in den Figuren 9 bis 12 dargestellt, und ferner ist dargestellt, dass auch im fundamentseitigem Wärmespeicher 4 ein Kern 65 vorhanden ist, der bevorzugt aus Beton besteht.

Der Sekundär-Wärmetauscher im fundamentseitigen Wärmespeicher 4 ist mit dem Bezugszeichen 64 versehen und die nach außen geführten Rohranschlüsse sind mit 63 bezeichnet. Ebenso ist erkennbar, dass der fundamentseitige Wärmespeicher 4 von einer in sich geschlossenen Dämmung 66 umgeben ist.

Die Figur 14 zeigt im verkleinerten Maßstab einen Schnitt durch den fundamentseitigen Speicherkern 65 der Energiesäule 2. Nachdem die Einbauten und die Funktion des Speicherkerns 65 im Fundament 3 mit denen des Speicherkerns 39 in der Säule 2 übereinstimmen, werden die Bezugszeichen 39 und 65 für einen Speicherkern synonym verwendet.

Dabei sind im Außenbereich des aus Beton bestehenden Speicherkerns 65 Bewehrungen 69 eingegossen und im Speicherkern 65 sind die Rohre des Sekundärwärmetauschers 38 zusammen mit den Komponenten des Tertiär-Wärmetauschers 40 eingebettet.

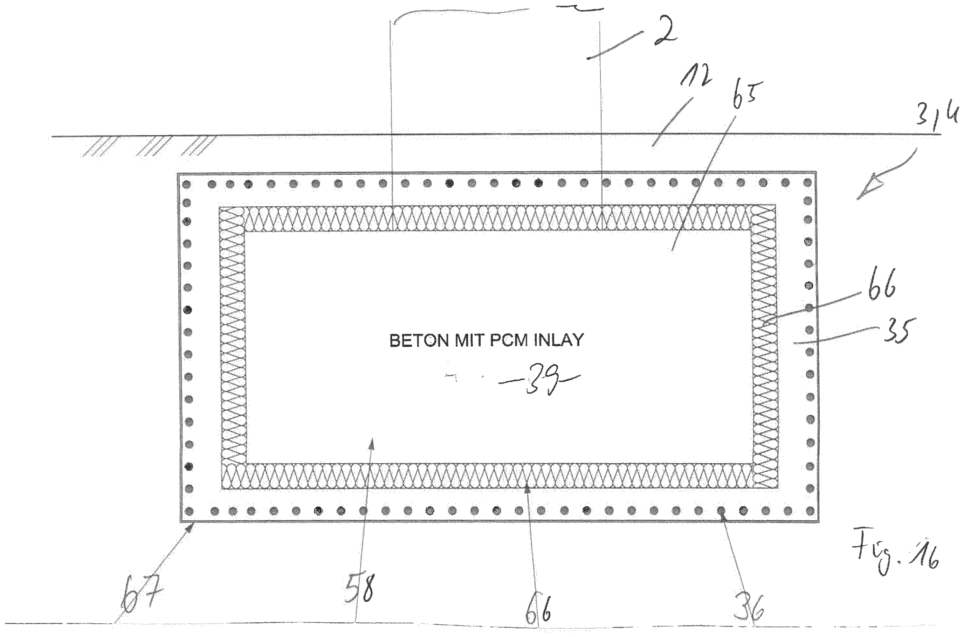

Die Figur 15 zeigt die Einbettung des in Figur 14 gezeigten Speicherkerns 65 in eine in sich geschlossene Dämmung 66, wobei die weiteren Einzelheiten in Figur 16 vergrößert dargestellt sind.

Die Figur 16 zeigt unter Weglassung von bestimmten Teilen des Speicherkerns 65 die weiteren Teile, die den Speicherkern 65 umgeben.

Der fundamentseitige Wärmespeicher 4 ist außenseitig von einem Blechmantel 67 umgeben, welcher die Wärme des Erdreichs aufnimmt und den im PCM-Material des Pufferspeichers 35 eingebetteten Rohren 36 des primären Wärmetauschers 36 zuführt.

Innenseitig wird der Pufferspeicher 35 durch eine Dämmung 66 begrenzt, welche den in Beton gefassten Speicherkern 39, 65 vollständig ummantelt. Damit wird die Erdwärme des Erdreichs 12 vom Blechmantel 67 auf den Pufferspeicher 65 mit den dort eingebetteten Rohren des Primär-Wärmespeichers 36 geleitet und gleichzeitig das PCM-Material des Pufferspeichers 35 aufgeheizt.

Wärmetechnisch trennt die Dämmung 66 den Primär-Wärmespeicher 36 von den im Speicherkern 39, 65 eingebetteten Sekundär- und Tertiär-Wärmetauschern 38 und 40, sodass eine getrennte Speicherung der Erdwärme im Speichermedium des Pufferspeichers 35 von der über die Solarkollektoren gesammelte Energie erfolgt, die in den Speichermedien des Speicherkerns 39, 65 mit höherem Energiegehalt gespeichert wird.

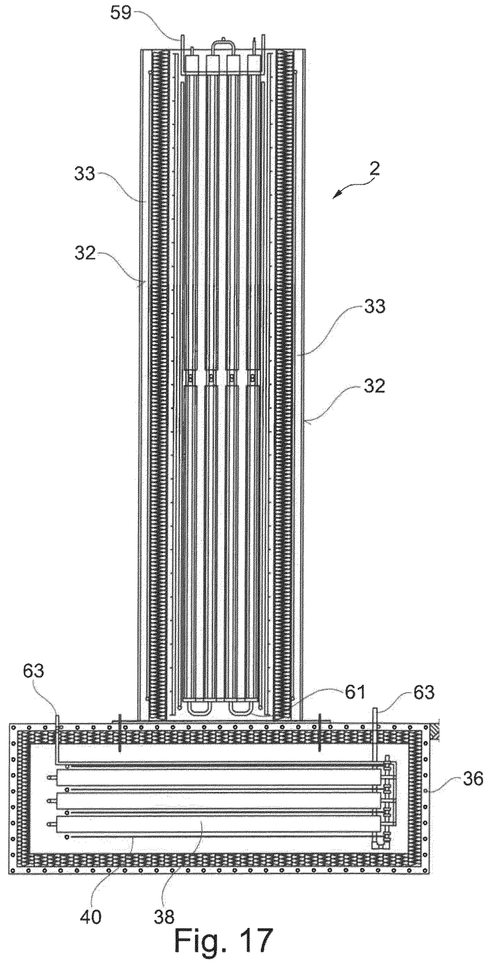

Die Figur 17 zeigt einen um 90 Grad gedrehten Längsschnitt durch die Energiesäule im Vergleich zur Figur 13, wobei für die gleichen Teile die gleichen Bezugszeichen gelten.

Vorteil der vorliegenden Erfindung ist demnach, dass unter Ausnützung der Sonnenergie eine autonom arbeitende Anlage mit hohem Wirkungsgrad eine Bereitstellung von Heizwasser und Kältewasser gewährleistet, die auf keine Fremdenergie angewiesen ist und - in der Vollausstattung - autark arbeitet.

Sie ist modular aufgebaut und kann in jedem Vorgarten aufgestellt werden, um - unabhängig von Wärmepumpen und der Zuführung elektrischer Energie - autark zu arbeiten. Es handelt sich demnach um eine dezentrale Wärmeerzeugung und die verwendeten Peltier-Elemente haben den besonderen Vorteil, dass sie mit einer Spannung von 12 Volt arbeiten, die unmittelbar und ohne verlustreiche Wechselrichter von den Solarpanelen bereitgestellt wird, sodass auch in diesem Fall keine Fremdenergie zur Verfügung gestellt werden muss.

### Zeichnungslegende

- 1: Miniatur-Kraftwerk
- 2: Energiesäule
- 3: Fundament
- 4: Wärmespeicher
- 5: Wärmepumpe (elektrisch)
- 6: Windturbine
- 7: Strahlung Energie
- 8: Sonnenstrahlen
- 9: Windenergie
- 10: Anlagenhöhe
- 11: Turbinenhöhe
- 12: Erdreich
- 13: Solar Paneel
- 14: Gebäudedecke
- 15: Gebäude-WT
- 16: Wärmeenergie
- 17: Gebäude
- 18: Strahlungskonvektor
- 19: Dach-Wärmetauscher
- 20: Dämmung
- 21: Gebäude-Wärmespeicher
- 22: Gebäude-Fundament
- 23: Gebäude-Wärmespeicher
- 24: Kältesäule
- 25: Kälte-Fundament
- 26: Kälte-Wärmespeicher
- 27: Rieselplatte
- 28: Wasser
- 29: Verdunstungskälte
- 30: Kälte-Wärmetauscher
- 31: Versorgungsleitungen
- 32: Glasscheibe
- 33: Luftspalt
- 34: Dämmung
- 35: Pufferspeicher
- 36: Primär-Wärmetauscher
- 37: Blechabsorber
- 38: Sekundärwärmetauscher
- 39: Speicherkern
- 40: tertiärer Wärmetauscher
- 41: Anlauflinie
- 41a: Scheitelpunkt
- 42: Temperatur-Bandbreite
- 43: Gerade
- 44: Punkt
- 45: Gerade
- 46: Außenmantel (von 46a)
- 46a: Metallrohr
- 47: Innenraum (von 46a)
- 48: Wärmeleitblech (in 47)
- 49: Leitkanal (von 48)
- 50: Kanalquerschnitt (schmal)
- 51: Mittenrohr
- 52: Innenraum
- 53 54: Durchströmloch
- 55: Pfeilrichtung
- 56: Heizwasser
- 57: PCM-Material
- 58: Beton
- 59: Rohr (von 38)
- 60: Rohr (von 40)
- 61: Rohranschluss unten
- 62: Rohranschluss oben
- 63: Rohranschluss
- 64: Sekundärwärmetauscher
- 65: Kern (Fundament)
- 66: Dämmung
- 67: Blechmantel
- 68: Rohre (von 38)
- 69: Bewehrung

## Patentansprüche

1. Freistehender Massivabsorber in der Form einer entfernt von einem Gebäude aufgestellten Säule (2), die zumindest aus einem tragenden Betonkörper (39, 58) besteht, in dem die Rohre (68) eines Wärmetauschers (38) eingebettet sind, **dadurch gekennzeichnet, dass** der Massivabsorber aus mehreren zueinander konzentrischen Schalen (32, 33, 34, 39) besteht, von denen eine der Schalen als tragender Betonkörper (39, 58) ausgebildet ist und dass die erste, äußerste Schale aus einer mehrere Seiten des Massivabsorbers (2) umfassenden, das Sonnenlicht erfassenden Glasscheibe (32) besteht, die einen mehrere Seiten des Massivabsorbers (2) umfassenden Luftspalt (33) als zweite Schale begrenzt, welcher Luftspalt als dritte Schale einen primären Wärmetauscher (36) begrenzt, der in einem ersten Pufferspeicher (35) eingebettet ist.

2. Massivabsorber nach Anspruch 1, **dadurch gekennzeichnet, dass** der primäre Wärmetauscher (36) von einer innenseitig mehrere Seiten des Massivabsorbers (2) umfassenden Dämmung (34) als vierte Schale begrenzt ist.

3. Massivabsorber nach Anspruch 1 oder 2, **dadurch gekennzeichnet, dass** in dem aus tragendem Beton bestehenden Speicherkern (39) weitere Wärmetauscher (38, 40) und Latentwärmespeicher (40, 57) eingebettet sind.

4. Massivabsorber nach einem der Ansprüche 1 bis 3, **dadurch gekennzeichnet, dass** der Pufferspeicher (35) des primären Wärmetauschers ein Latentwärmespeicher mit einem PCM-Material (57) ist.

5. Massivabsorber nach einem der Ansprüche 1 bis 4, **dadurch gekennzeichnet, dass** im Speicherkern (39) die Rohre (68) eines Sekundär-Wärmetauschers (38) und zusätzlich eine Anzahl von über den Querschnitt des Speicherkerns (39) verteilt angeordnete Tertiär-Wärmetauscher (40) eingebettet sind.

6. Massivabsorber nach einem der Ansprüche 1 bis 5, **dadurch gekennzeichnet, dass** der Tertiär-Wärmetauscher (40) aus einer Anzahl von zueinander parallelen und mit ihrem Außenmantel (46) in den Speicherkern (39) eingebetteten Metallrohren (46a) besteht, in deren Innenraum (57) ein zentrales, die Heiz- und/oder Kühlflüssigkeit führendes Mittenrohr (51) angeordnet ist, das in einem im Metallrohr (46a) spaltfüllend vorhandenen PCM-Material (57) lagenfixiert eingebettet ist.

7. Massivabsorber nach Anspruch 6, **dadurch gekennzeichnet, dass** die mit dem PCM-Material (57) gefüllten Metallohre (46a) so ausgebildet sind, dass die Wärmeenergie aus der Umgebung über den Beton an das PCM-Material (57) im Latentwärmespeicher geführt wird.

8. Massivabsorber nach Anspruch 6 oder 7, **dadurch gekennzeichnet, dass** Wärmeleitbleche (48) im Inneren der Metallrohre (46a) zur schnelleren Wärmeverteilung innerhalb des PCM-Latentwärmespeichers vorgesehen sind.

9. Massivabsorber nach einem der Ansprüche 1 bis 8, **dadurch gekennzeichnet, dass** weitere Wärmeenergie in dem zur Säule (2) gehörenden Fundament (3) speicherbar ist.

10. Massivabsorber nach Anspruch 9, **dadurch gekennzeichnet, dass** das Betonvolumen des Fundaments (3) ebenfalls mit einzelnen Rohrleitungen als Einbauteile bestückt ist und dass die Wärmeenergie sowohl über die Wärmetauscher (38) im Beton (58) als auch über die Wärmetauscher (40) in den Metallrohren (46a) eingefügt und abgeführt werden kann.

11. Massivabsorber nach Anspruch 9 oder 10, **dadurch gekennzeichnet, dass** die in direktem Kontakt mit dem Erdreich stehende Oberfläche des Fundaments (3) den Wärmeaustausch mit dem Erdreich über in der Oberfläche eingebaute Absorber (36) ausführt, dessen Rohleitungen (46a, 68) in einem mit PCM-Material (57) gefüllten Latentwärmespeicher (35, 40) eingebettet sind.

12. Massivabsorber nach einem der Ansprüche 1 bis 11, **dadurch gekennzeichnet, dass** er autark ohne Zuführung von elektrischer Fremdenergie arbeitet.

13. Massivabsorber nach Anspruch 12, **dadurch gekennzeichnet, dass** die zur Stromversorgung der elektrischen Aggregate notwendige Strom von säuleneigenen Aggregaten erzeugt wird, vorzugsweise einer Windturbine (6) und/oder einem elektrischen Solarpaneel (13).

14. Massivabsorber nach einem der Ansprüche 1 bis 13, **dadurch gekennzeichnet, dass** eine zusätzliche, elektrisch betriebene Wärmepumpe (5) vorhanden ist, die von den säuleneigenen Aggregaten gespeist ist.

15. Massivabsorber nach einem der Ansprüche 1 bis 14, **dadurch gekennzeichnet, dass** er als freistehende Säule (2) mit einer bevorzugten Höhe im Bereich zwischen 8 bis 10 Meter bei quadratischen Kantenabmessungen von 80 × 80 cm ausgebildet ist.

## Claims

1. Free-standing solid absorber in the form of a column (2) erected away from a building and which consists of at least one load-bearing concrete body (39, 58) in which the tubes (68) of a heat exchanger (38) are embedded, **characterised in that** the solid absorber consists of several shells (32, 33, 34, 39) concentric to one another, of which one of the shells is designed as a load-bearing concrete body (39, 58) and **in that** the first, outermost shell consists of a glass pane (32) encompassing several sides of the solid absorber (2), capturing the sunlight, and defining an air gap (33) encompassing several sides of the solid absorber (2) as a second shell which air gap defines as a third shell a primary heat exchanger (36) which is embedded in a first buffer store (35).

2. Solid absorber according to claim 1, **characterised in that** the primary heat exchanger (36) is defined by insulation (34) encompassing several sides of the solid absorber (2) on the inner side as a fourth shell.

3. Solid absorber according to claim 1 or 2, **characterised in that** further heat exchangers (38, 40) and latent heat stores (40, 57) are embedded in the storage core (39) consisting of load-bearing concrete.

4. Solid absorber according to one of claims 1 to 3, **characterised in that** the buffer store (35) of the primary heat exchanger is a latent heat store with a PCM material (57).

5. Solid absorber according to one of claims 1 to 4, **characterised in that** the tubes (68) of a secondary heat exchanger (38) and additionally a number of tertiary heat exchangers (40) arranged distributed over the cross-section of the storage core (39) are embedded in the storage core (39).

6. Solid absorber according to one of claims 1 to 5, **characterised in that** the tertiary heat exchanger (40) consists of a number of metal tubes (46a) parallel to one another and embedded with their outer jacket (46) in the storage core (39), in the interior (57) of the metal tubes (46a) being arranged a central middle tube (51) guiding the heating liquid and/or cooling liquid and which is embedded to be fixed in position in a PCM material (57) present to fill the gap in the metal tube (46a).

7. Solid absorber according to claim 6, **characterised in that** the metal tubes (46a) filled with the PCM material (57) are designed so that the thermal energy from the surroundings is guided via the concrete to the PCM material (57) in the latent heat store.

8. Solid absorber according to claim 6 or 7, **characterised in that** heat deflector plates (48) are provided in the interior of the metal tubes (46a) for more rapid heat distribution within the PCM latent heat store.

9. Solid absorber according to one of claims 1 to 8, **characterised in that** further thermal energy can be stored in the foundation (3) belonging to the column (2).

10. Solid absorber according to claim 9, **characterised in that** the concrete volume of the foundation (3) is likewise equipped with individual pipelines as mounting parts and **in that** the thermal energy may be introduced and removed both via the heat exchangers (38) in the concrete (58) and via the heat exchangers (40) in the metal tubes (46a).

11. Solid absorber according to claim 9 or 10, **characterised in that** the surface of the foundation (3) in direct contact with the ground executes heat exchange with the ground via absorbers (36) installed in the surface, the pipelines (46a, 68) of which are embedded in a latent heat store (35, 40) filled with PCM material (57).

12. Solid absorber according to one of claims 1 to 11, **characterised in that** it operates self-sufficiently without supplying foreign electric energy.

13. Solid absorber according to claim 12, **characterised in that** the current necessary to supply current to the electric units is generated by separate column units, preferably a wind turbine (6) and/or an electric solar panel (13).

14. Solid absorber according to one of claims 1 to 13, **characterised in that** an additional, electrically operated heat pump (5) is present which is supplied by the separate column units.

15. Solid absorber according to one of claims 1 to 14, **characterised in that** it is designed as a free-standing column (2) with a preferred height in the range between 8 to 10 metres with square edge measurements of 80 × 80 cm.

## Revendications

1. Absorbeur massif indépendant sous la forme d'une colonne (2) posée loin d'un bâtiment qui est au moins constituée d'un corps en béton porteur (39, 58) dans lequel sont intégrés les tuyaux (68) d'un échangeur de chaleur (38), **caractérisé en ce que** l'absorbeur massif est constitué de plusieurs coques (32, 33, 34, 39) concentriques, l'une de ces coques étant formée en tant que corps en béton porteur (39, 58), et que la première coque, la plus extérieure, est constituée d'une plaque de verre (32) incluant plusieurs côtés de l'absorbeur massif (2) et captant la lumière du soleil qui délimite une fente d'air (33) incluant plusieurs côtés de l'absorbeur massif (2) en tant que deuxième coque, laquelle fente délimite en tant que troisième coque un échangeur de chaleur primaire (36) qui est intégré dans un premier accumulateur tampon (35).

2. Absorbeur massif selon la revendication 1, **caractérisé en ce que** l'échangeur de chaleur primaire (36) est délimité par une isolation (34) incluant, côté intérieur, plusieurs côtés de l'absorbeur massif (2) en tant que quatrième coque.

3. Absorbeur massif selon la revendication 1 ou 2, **caractérisé en ce que** dans le coeur d'accumulateur (39) en béton porteur sont intégrés d'autres échangeurs de chaleur (38, 40) et accumulateurs de chaleur latente (40, 57).

4. Absorbeur massif selon l'une des revendications 1 à 3, **caractérisé en ce que** l'accumulateur tampon (35) de l'échangeur de chaleur primaire est un accumulateur de chaleur latente comprenant un matériau PCM (47).

5. Absorbeur massif selon l'une des revendications 1 à 4, **caractérisé en ce que** dans le coeur d'accumulateur (39) sont intégrés les tuyaux (68) d'un échangeur de chaleur secondaire (38) et, en supplément, un certain nombre d'échangeurs de chaleur tertiaires (40) répartis sur la section transversale du coeur d'accumulateur (39).

6. Absorbeur massif selon l'une des revendications 1 à 5, **caractérisé en ce que** l'échangeur de chaleur tertiaire (40) est constitué d'un certain nombre de tuyaux en métal (46a) parallèles les uns aux autres et intégrés avec leur enveloppe extérieure (46) dans le coeur d'accumulateur (39) dans l'espace intérieur (57) desquels est disposé un tuyau central (51) conduisant le liquide de chauffage et/ou de refroidissement qui est intégré, fixe en position, dans un matériau PCM (57) présent dans le tuyau en métal (46a) en remplissant l'interstice.

7. Absorbeur massif selon la revendication 6, **caractérisé en ce que** les tuyaux en métal (46a) remplis du matériau PCM (57) sont formés de manière telle que l'énergie thermique soit conduite par l'intermédiaire du béton de l'environnement jusqu'au matériau PCM (57) dans l'accumulateur de chaleur latente.

8. Absorbeur massif selon la revendication 6 ou 7, **caractérisé en ce que** des tôles conductrices de chaleur (48) sont prévues à l'intérieur des tuyaux en métal (46a) pour une répartition de chaleur plus rapide à l'intérieur de l'accumulateur de chaleur latente en PCM.

9. Absorbeur massif selon l'une des revendications 1 à 8, **caractérisé en ce que** de l'énergie thermique supplémentaire peut être accumulée dans la base (3) appartenant à la colonne (2).

10. Absorbeur massif selon la revendication 9, **caractérisé en ce que** le volume de béton de la base (3) est équipé lui aussi de conduites individuelles en tant qu'éléments de montage et que l'énergie thermique peut être introduite et évacuée aussi bien par les échangeurs de chaleur (38) dans le béton (58) que par les échangeurs de chaleur (40) dans les tuyaux en métal (46a).

11. Absorbeur massif selon la revendication 9 ou 10, **caractérisé en ce que** la surface de la base (3) en contact direct avec la terre effectue l'échange de chaleur avec la terre par l'intermédiaire d'absorbeurs (36) montés dans ladite surface, dont les conduites (46a, 68) sont intégrées dans un accumulateur de chaleur latente (35, 40) rempli de matériau PCM (57).

12. Absorbeur massif selon l'une des revendications 1 à 11, **caractérisé en ce qu'il** fonctionne en autarcie, sans alimentation en énergie extérieure électrique.

13. Absorbeur massif selon la revendication 12, **caractérisé en ce que** le courant nécessaire à l'alimentation en courant des agrégats électriques est produit par des agrégats propres à la colonne, de préférence une éolienne (6) et/ou un panneau solaire électrique (13).

14. Absorbeur massif selon l'une des revendications 1 à 13, **caractérisé en ce qu'**il est prévu une pompe à chaleur (5) supplémentaire, à commande électrique, qui est alimentée par les agrégats propres à la colonne.

15. Absorbeur massif selon l'une des revendications 1 à 14, **caractérisé en ce qu'**il est formé en tant que colonne indépendante (2) d'une hauteur préférée dans la plage entre 8 à 10 mètres pour des dimensions carrées de 80 × 80 cm.
